# EUROPEAN PATENT APPLICATION

(11) **EP 4 239 890 A1**
(43) Date of publication of application: **06.09.2023**
(21) Application number: 21905289.1
(22) Date of filing: 21.10.2021
(51) Int. Cl.: H04B 1/40

(54) **RADIO FREQUENCY TRANSCEIVER SYSTEM AND COMMUNICATION DEVICE**

(30) Priority: 16.12.2020 CN 202011487412
(71) Applicant: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Taor, Simon Edward William
(86) International application number: PCT/CN2021/125277
(87) International publication number: WO 2022/127360

(57) **Abstract**

A radio-frequency transceiver system includes: a radio-frequency transceiver (10); an antenna group including a first antenna (Ant1), a second antenna (Ant2), a third antenna (Ant3), and a fourth antenna (Ant4), the antenna group being configured to transmit and receive a radio-frequency signal; a radio-frequency LFEM device (20) at least having a first antenna port (ANT1) configured to be connected to the first antenna (Ant1), a second antenna port (ANT2) configured to be connected to the second antenna (Ant2), a third antenna port (ANT3) configured to be connected to the third antenna (Ant3), and at least three first receiving ports each configured to be connected to the radio-frequency transceiver (10), the radio-frequency LFEM device (20) being configured to support three-channel reception of at least one frequency band; and a transceiver selection module (30) connected to the radio-frequency transceiver (10), the radio-frequency LFEM device (20), the first antenna (Ant1), the second antenna (Ant2), the third antenna (Ant3), and the fourth antenna (Ant4), and configured to support a transmission or reception selection of the at least one frequency band.

## Description

### CROSS-REFERENCE TO RELATED APPLICATION

This application claims a priority to Chinese Patent Application No. 2020114874124, titled "RADIO-FREQUENCY TRANSCEIVER SYSTEM AND COMMUNICATION DEVICE", and filed with China National Intellectual Property Administration on December 16, 2020, the entire disclosure of which is incorporated herein by reference.

### FIELD

The present disclosure relates to the field of radio-frequency technologies, and more particularly, to a radio-frequency transceiver system and a communication device.

### BACKGROUND

The statements herein provide only background information relevant to the present disclosure and do not necessarily constitute exemplary related art.

With the development and advancement of technology, the 5th Generation Mobile Communication Technology (5G) has been increasingly applied to electronic devices. The 5G mobile communication technology has a higher communication frequency than the 4th Generation Mobile Communication Technology (4G). Generally, in order to increase a channel capacity of a radio-frequency system, a plurality of radio-frequency front-end modules is provided on receiving paths of the system to cooperate with an antenna array, which may cause higher cost and occupy a relatively large area of a substrate.

### SUMMARY

Embodiments of the present disclosure provide a radio-frequency transceiver system and a communication device.

The radio-frequency transceiver system includes: a radio-frequency transceiver; an antenna group including a first antenna, a second antenna, a third antenna, and a fourth antenna, and configured to support receiving and transmitting a radio-frequency signal; a radio-frequency Low noise amplifier Front-End Module (LFEM) device at least having a first antenna port configured to be connected to the first antenna, a second antenna port configured to be connected to the second antenna, a third antenna port configured to be connected to the third antenna, and at least three receiving ports each configured to be connected to the radio-frequency transceiver, the radio-frequency LFEM device being configured to support three-channel reception of at least one frequency band; and a transceiver selection module connected to the radio-frequency transceiver, the radio-frequency LFEM device, the first antenna, the second antenna, the third antenna, and the fourth antenna, and configured to support a transmission or reception selection of the at least one frequency band, to allow the radio-frequency transceiver system to implement a 4*4 Multiple-Input Multiple-Output (MIMO) function for the at least one radio-frequency signal.

The communication device includes the radio-frequency transceiver system as described above.

One or more of the embodiments of the present disclosure are described in detail below in combination with the accompanying drawings. Other features, objects and advantages of the present disclosure will become apparent from the specification, the accompanying drawings, and the claims as attached.

### BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.
FIG. 1a is a first schematic diagram of an application scenario for a feedback channel information transmission of a communication device according to an embodiment.
FIG. 1b is a second schematic diagram of an application scenario for a feedback channel information transmission of a communication device according to an embodiment.
FIG. 2 is a schematic diagram of a mode of a Sounding Reference Signal (SRS) antenna polling transmission according to an embodiment.
FIG. 3 is a first schematic structural diagram of a radio-frequency transceiver system according to an embodiment.
FIG. 4 is a first schematic structural diagram of a radio-frequency Low noise amplifier Front-End Module (LFEM) device according to an embodiment.
FIG. 5 is a second schematic structural diagram of a radio-frequency transceiver system according to an embodiment.
FIG. 6 is a second schematic structural diagram of a radio-frequency LFEM device according to an embodiment.
FIG. 7 is a third schematic structural diagram of a radio-frequency LFEM device according to an embodiment.
FIG. 8 is a third schematic structural diagram of a radio-frequency transceiver system according to an embodiment.
FIG. 9 is a fourth schematic structural diagram of a radio-frequency LFEM device according to an embodiment.
FIG. 10 is a fifth schematic structural diagram of a radio-frequency LFEM device according to an embodiment.
FIG. 11 is a fourth schematic structural diagram of a radio-frequency transceiver system according to an embodiment.
FIG. 12 is a sixth schematic structural diagram of a radio-frequency LFEM device according to an embodiment.
FIG. 13 is a fifth schematic structural diagram of a radio-frequency transceiver system according to an embodiment.
FIG. 14 is a seventh schematic structural diagram of a radio-frequency LFEM device according to an embodiment.
FIG. 15 is a sixth schematic structural diagram of a radio-frequency transceiver system according to an embodiment.
FIG. 16 is an eighth schematic structural diagram of a radio-frequency LFEM device according to an embodiment.
FIG. 17 is a seventh schematic structural diagram of a radio-frequency transceiver system according to an embodiment.
FIG. 18a is a schematic diagram of packaged pins of a radio-frequency LFEM device in FIG. 4 and FIG. 5 according to an embodiment.
FIG. 18b is a schematic diagram of packaged pins of the radio-frequency LFEM device in FIG. 6 and FIG. 7 according to an embodiment.
FIG. 18c is a schematic diagram of packaged pins of the radio-frequency LFEM device in FIG. 9 and FIG. 10 according to an embodiment.
FIG. 18d is a schematic diagram of packaged pins of the radio-frequency LFEM device in FIG. 12 according to an embodiment.
FIG. 18e is a schematic diagram of packaged pins of the radio-frequency LFEM device in FIG. 14 according to an embodiment.
FIG. 18f is a schematic diagram of packaged pins of the radio-frequency LFEM device in FIG. 16 according to an embodiment.

### DETAILED DESCRIPTION

In order to facilitate understanding of the present disclosure and to clarify the features and advantages of the present disclosure, specific embodiments of the present disclosure are described in detail below in conjunction with the accompanying drawings. In the following description, many specific details are provided to facilitate full understanding of the present disclosure. Preferred embodiments of the present disclosure are illustrated by means of the accompanying drawings. However, the present disclosure may be implemented in various forms and is not limited to the embodiments described herein. On the contrary, these embodiments are merely provided to facilitate thorough and comprehensive understanding of the content of the present disclosure. The present disclosure can be implemented in various manners other than those described herein, and similar improvements can be made by those skilled in the art without contradicting the concept of the present disclosure. Therefore, the present disclosure is not limited by specific embodiments disclosed below.

In addition, the term such as "first" or "second" is only for descriptive purposes, rather than indicating or implying relative importance or implicitly indicating the number of indicated technical features. Therefore, the features defined with "first" or "second" may explicitly or implicitly include at least one of the features. In the description of the present disclosure, "plurality of' means at least two, unless otherwise specifically indicated. In the present disclosure, "a number of' means at least one, for example, one, two, etc., unless otherwise specifically indicated.

A radio-frequency transceiver system according to the embodiments of the present disclosure can be applied to a communication device having a wireless communication function. The communication device may be a handheld device, a vehicle-mounted device, a wearable device, a computing device, any other processing devices connected to a wireless modem, a user equipment (LTE) in various forms (e.g., a mobile phone), or a mobile station (MS), etc. For ease of description, the above-mentioned devices can be collectively referred to as the communication device. A network device may include a base station, an access point, etc.

The radio-frequency transceiver system according to the embodiments of the present disclosure can support the 5G technology, which is the latest generation of cellular mobile communication technology and an extension following the 4G, 3-rd Generation Mobile Communication Technology (3G), and 2-nd Generation Mobile Communication Technology (2G) systems. Performance targets of 5G are high data rate, reduced latency, energy saving, cost reduction, increased system capacity, and mass device connectivity. 5G can be divided into two modes, i.e., a Standalone Access (SA) mode and a Non-Standalone Access (NSA) mode. In the NSA mode, 5G control signaling is anchored to a 4G base station, while a 5G base station is directly connected to a 5G core network and control signaling is independent of a 4G network in the SA mode.

The 5G network supports beam-shaping technology, allowing directional transmission to communication devices. For the directional transmission, a base station is first required to detect a position of a communication device, a quality of a transmitting path, etc., in order to accurately allocate resources of the base station to each of the communication devices.

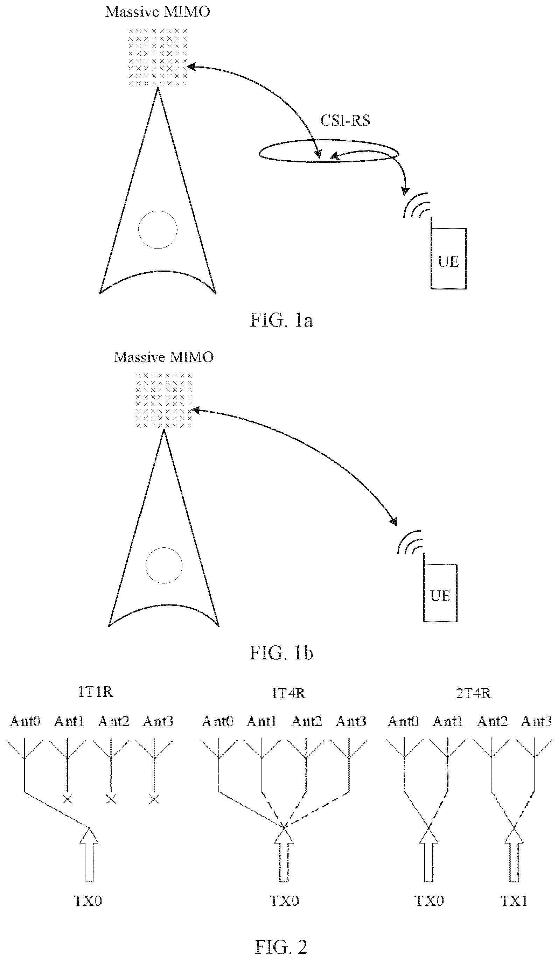

Currently, the communication device provides feedback of channel information in two different modes: Precoding Matrix Indicator (PMI) and Sounding Reference Signal (SRS), signal transmissions of which are illustrated in FIG. 1a and FIG. 1b, respectively. By standard definition, PMI is a mandatory function for all 5G communication devices, while SRS is an optional function. In PMI, relying on a measurement of a terminal and various quantization algorithms, the base station estimates channel information and resource requirements in accordance with a pre-determined mechanism, and reports the channel information and the resource requirements to the base station. In SRS, the channel information is directly reported to the base station by means of channel reciprocity. Thus, SRS is more accurate than PMI.

The base station can detect a position of the terminal and a channel quality by transmitting SRS information by means of the communication device. SRS antenna polling transmission is illustrated in FIG. 2 and will be explained in detail below.

1T1R: feeding back information to the base station only at a first antenna, not supporting the SRS polling transmission.

1T4R: transmitting SRS information alternately at the first antenna to a fourth antenna, in which only one antenna is selected for transmission each time, and which is currently adopted by NSA networks.

2T4R: transmitting SRS information alternately at the first antenna to the fourth antenna, in which two antennas are selected for transmission each time, and which is currently adopted by SA networks.

In an SRS mode, with an increase in the number of antennas that can participate in transmitting a reference signal, the channel estimation is more accurate, and thus the corresponding rate can be higher. With the same number of antennas, the SA mode can complete the channel estimation faster than the NSA mode, thereby increasing a network channel estimation speed.

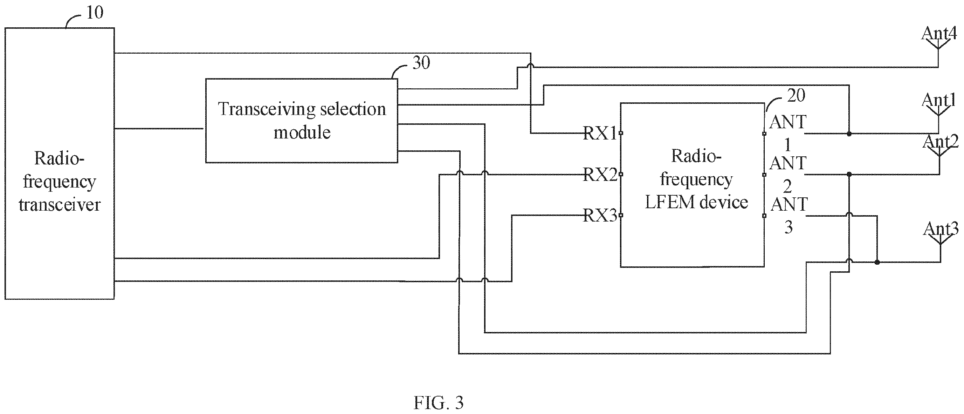

The embodiments of the present disclosure provide a radio-frequency transceiver system. As illustrated in FIG. 3, in an embodiment, the radio-frequency transceiver system includes a radio-frequency transceiver 10, an antenna group, a radio-frequency LFEM device 20, and a transceiver selection module 30.

For example, the radio-frequency transceiver 10 may include a transmitter (e.g., transmitter **TX**) and a receiver (e.g., receiver **RX**), or a receiver (e.g., receiver **RX**) only, or a transmitter (e.g., transmitter **TX**) only. The radio-frequency transceiver 10 may be configured to implement a frequency conversion processing between radio-frequency signals and baseband signals, or/and to implement a frequency conversion processing on signals in different frequency bands, etc.

The antenna group at least includes a first antenna **Ant1**, a second antenna **Ant2,** a third antenna **Ant3,** and a fourth antenna **Ant4**. The first antenna **Ant1**, the second antenna **Ant2**, the third antenna **Ant3**, and the fourth antenna **Ant4** may be configured to receive and transmit radio-frequency signals in N41, N77, and N79 frequency bands. That is, the first antenna **Ant1**, the second antenna **Ant2**, the third antenna **Ant3**, and the fourth antenna **Ant4** are each an antenna capable of supporting 5G New Radio (NR) signals.

In an embodiment, each antenna in the antenna group may be a directional antenna or a non-directional antenna. For example, each antenna in the antenna group may be formed using any suitable type of antenna. For example, each antenna within the antenna group may include an antenna including a resonant element and having at least one of the following antenna structures: an array antenna structure, a loop antenna structure, a patch antenna structure, a slot antenna structure, a spiral antenna structure, a strip antenna, a monopole antenna, a dipole antenna, or the like. Different types of antennas can be used for combinations of frequency bands of different radio-frequency signals.

In the embodiments of the present disclosure, the radio-frequency LFEM device 20 can be regarded as a Low Noise Amplifier-Front-End Module, which is configured to support three-channel reception of a radio-frequency signal in at least one frequency band and further configured to support transmission of the radio-frequency signal. The radio-frequency LFEM device 20 can support a 4*4 MIMO function in conjunction with the first antenna **Ant1**, the second antenna **Ant2**, the third antenna, **Ant3**, the fourth antenna **Ant4**, and the transceiver selection module 30. The radio-frequency LFEM device 20 at least has a first antenna port **ANT1,** a second antenna port **ANT2**, a third antenna port **ANT3**, and at least three receiving ports **RX,** which are receiving ports **RX1, RX2** and **RX3,** respectively.

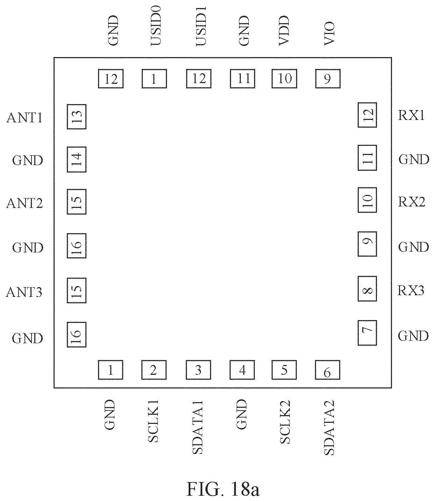

As illustrated in FIG. 18a, in an embodiment, the radio-frequency LFEM device 20 can be regarded as a packaged chip. The first antenna port **ANT1**, the second antenna port **ANT2,** the third antenna port **ANT3**, and the receiving port **RX** in the radio-frequency LFEM device 20 can be regarded as radio-frequency pin terminals for connecting to external devices. For example, the first antenna port **ANT1** can input a radio-frequency signal received by the first antenna **Ant1** to the radio-frequency LFEM device 20, and transmit, via the first antenna **Ant1**, a radio-frequency signal processed by the radio-frequency LFEM device 20. The second antenna port **ANT2** can input a radio-frequency signal received by the second antenna **Ant2** to the radio-frequency LFEM device 20, and transmit, via the second antenna **Ant2,** the radio-frequency signal processed by the radio-frequency LFEM device 20. The third antenna port **ANT3** can input a radio-frequency signal received by the third antenna **Ant3** to the radio-frequency LFEM device 20, and transmit, via the third antenna **Ant3**, the radio-frequency signal processed by the radio-frequency LFEM device 20. Three receiving ports **RX** can process radio-frequency signals received by the radio-frequency LFEM device 20 via the first antenna port **ANT1,** the second antenna port **ANT2,** and the third antenna port **ANT3,** respectively, and output the processed radio-frequency signals to the radio-frequency transceiver 10, thereby achieving a reception control of the radio-frequency signals.

The radio-frequency signal may be a 5G signal, such as a 5G signal in N41, N77 (N78), or N79 frequency band. As an example, the N41 frequency band is in an operating frequency band ranging from 496 MHz to 2,690 MHz; the N77 frequency band is in an operating frequency band ranging from 3.3 GHz to 4.2 GHz; the N78 frequency band is in an operating frequency band ranging from 3.3 GHz to 3.8 GHz; and the N79 frequency band is in an operating frequency band ranging from 4.4 GHz to 5.0 GHz. It should be noted that, the operating frequency band of N77 covers that of N78. That is, when the radio-frequency LFEM device 20 can support reception and transmission of radio-frequency signals in the N77 frequency band as well as reception and transmission of radio-frequency signals in the N78 frequency band accordingly.

The transceiver selection module 30 is connected to the radio-frequency transceiver 10, the radio-frequency LFEM device 20, the first antenna **Ant1**, the second antenna **Ant2,** the third antenna **Ant3,** and the fourth antenna **Ant4**. The transceiver selection module 30 can transmit, via any antenna in the antenna group, the radio-frequency signal in at least one frequency band transmitted by the radio-frequency transceiver 10. The transceiver selection module 30 can also receive a radio-frequency signal received by any antenna in the antenna group and transmit the received radio-frequency signal to the radio-frequency transceiver 10. In this way, the radio-frequency transceiver system can implement the 4*4 MIMO function for the radio-frequency signal in at least one frequency band. As an example, radio-frequency signals transmitted by the transceiver selection module 30 may be transmitted directly to the fourth antenna **Ant4** for transmission, or they may be transmitted, via the radio-frequency LFEM device 20, to the first antenna **Ant1**, the second antenna **Ant2,** or the third antenna **Ant3** for transmission.

MIMO technology refers to multiple transmission and multiple reception of a plurality of antennas by using a plurality of transmitting antennas at transmitting ports and a plurality of receiving antennas at receiving ports, thereby sufficiently utilizing space resources. In this way, a channel capacity of the system can be manifold increased without increasing spectrum resources and transmission power of antennas. The MIMO technology has significant advantages and can be regarded as the core technology of a next generation of mobile communication.

A terminal and a base station can constitute 2*2 MIMO or 4*4 MIMO. When receiving performance is tested in accordance with protocols stipulated by China Telecommunication Technology Labs (CTTL), 4 receiving channels are all connected to an instrument. The 4 receiving channels form a downlink of MIMO and all receive signals from an uplink base station, improving performance of a receiving set.

In the aforementioned radio-frequency transceiver system, the radio-frequency LFEM device 20 can implement the three-channel reception of the at least one frequency band of the radio-frequency signal. By integrating and packaging three receiving channels for the radio-frequency signal in a single frequency band into the same chip, an area occupied by the respective components on a substrate can be reduced, thereby saving the physical space for other modules for performance optimization and reducing the costs. The radio-frequency LFEM device 20, in combination with the antenna group and the transceiver selection module 30, can achieve the 4*4 MIMO function and increase the channel capacity of the system.

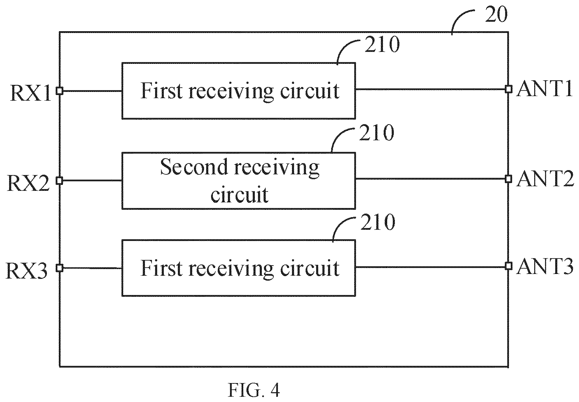

As illustrated in FIG. 4, in an embodiment, the radio-frequency LFEM device 20 at least includes three first receiving circuits 210. Output terminals of these three first receiving circuits 210 are connected to the three receiving ports RX, respectively. Each of the first receiving circuits 210 are configured to amplify a received radio-frequency signal in a first frequency band, and transmit the amplified radio-frequency signal to the radio-frequency transceiver 10 via the receiving port **RX** connected to the corresponding first receiving circuit 210, thereby enabling the radio-frequency LFEM device 20 to support the three-channel reception of the radio-frequency signal in the first frequency band.

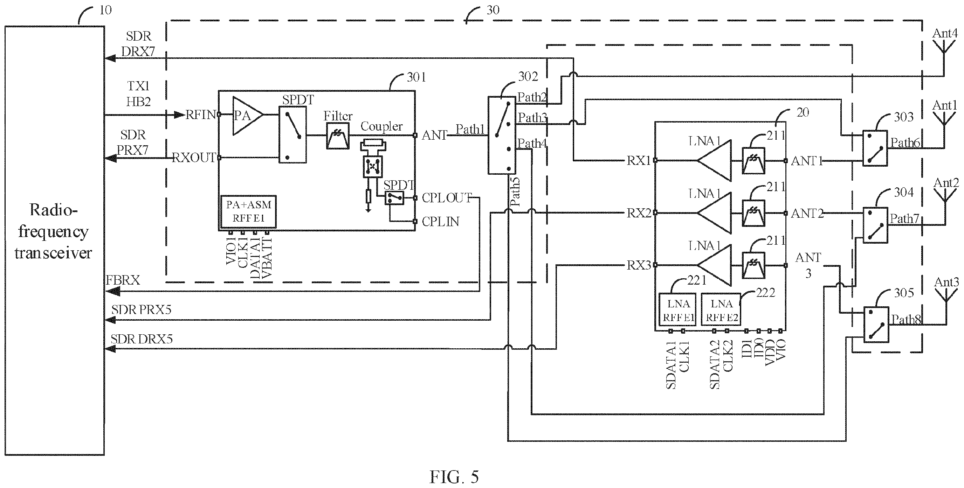

As illustrated in FIG. 5, in an embodiment, the first receiving circuit 210 includes a first low noise amplifier **LNA1,** output terminals of the three first low noise amplifiers **LNA1,** as the output terminals of the three first receiving circuits 210, are connected to the three receiving ports **RX,** respectively; and input terminals of the first low noise amplifiers **LNA1** of the three first receiving circuits 210 are configured to be connected to the first antenna port **ANT1,** the second antenna port **ANT2,** and the third antenna port **ANT3,** respectively, to form three receiving paths for the radio-frequency signal in the first frequency band. For example, when the first antenna **Ant1** receives the radio-frequency signal in the first frequency band, the first antenna **Ant1** may input the radio-frequency signal in the first frequency band to one first low noise amplifier **LNA1** via the first antenna port **ANT1**; and the radio-frequency signal in the first frequency band is amplified by the first low noise amplifier **LNA1** and then outputted to the radio-frequency transceiver 10 via the receiving port **RX1.** When the second antenna **Ant2** receives the radio-frequency signal in the first frequency band, the second antenna **Ant2** may input the radio-frequency signal in the first frequency band to another first low noise amplifier **LNA1** via the second antenna port **ANT2;** and the radio-frequency signal in the first frequency band is amplified by the first low noise amplifier **LNA1,** and then transmitted to the radio-frequency transceiver 10 via the receiving port **RX2.** When the third antenna **Ant3** receives the radio-frequency signal in the first frequency band, the third antenna **Ant3** may input the radio-frequency signal in the first frequency band to yet another first low noise amplifier **LNA1** via the third antenna port **ANTS;** and the radio-frequency signal in the first frequency band is amplified by the first low noise amplifier **LNA1** and then outputted to the radio-frequency transceiver 10 via the receiving port **RX3.**

As illustrated in FIG. 5, in an embodiment, the first receiving circuit 210 further includes a first filtering unit 211. The first filtering unit 211 is disposed in the receiving path of the radio-frequency signal in the first frequency band, and configured to perform filtering on the received radio-frequency signal in the first frequency band to output the processed radio-frequency signal in the first frequency band to the first low noise amplifier **LNA1.** The first filtering unit 211 is disposed between the input terminal of the first low noise amplifier and the first antenna port **ANT1**, the second antenna port **ANT2,** or the third antenna port **ANT3.**

As illustrated in FIG. 5, in an embodiment, respective input terminals of the first receiving circuits 210 are connected to the first antenna port **ANT1**, the second antenna port **ANT2,** and the third antenna port **ANT3** in one-to-one correspondence. The transceiver selection module 30 includes a first radio-frequency PA Mid device 301, a first switching unit 302, a first selection switch 303, a second selection switch 304, and a third selection switch 305. The first radio-frequency PAMid device 301 has a radio-frequency antenna port **ANT.** The first switching unit 302 includes one first terminal and four second terminals. The first terminal of the first switching unit 302 is connected to the radio-frequency antenna port of the first radio-frequency PA Mid device 301. The four second terminals of the first switching unit 302 are connected to the fourth antenna **Ant4,** a first terminal of the first selection switch 303, a first terminal of the second selection switch 304, and a first terminal of the third selection switch 305 in one-to-one correspondence. The first switching unit 302 is configured to switch on a radio-frequency path between the first radio-frequency PAMid device 301 and each of the first antenna **Ant1**, the second antenna **Ant2,** the third antenna **Ant3,** and the fourth antenna **Ant4.** Another first terminal of the first selection switch 303 is connected to the first antenna port **ANT1** of the radio-frequency LFEM device 20. A second terminal of the first selection switch 303 is connected to the first antenna **Ant1**. The first selection switch 303 is configured to selectively switch on a radio-frequency path between the first antenna **Ant1** and the first switching unit 302 or a radio-frequency path between the first antenna **Ant1** and the radio-frequency LFEM device 20. Another first terminal of the second selection switch 304 is connected to the second antenna port **ANT2** of the radio-frequency LFEM device 20. A second terminal of the second selection switch 304 is connected to the second antenna **Ant2.** The second selection switch 304 is configured to selectively switch on a radio-frequency path between the second antenna **Ant2** and the first switching unit 302 or a radio-frequency path between the second antenna and the radio-frequency LFEM device 20. Another first terminal of the third selection switch 305 is connected to the third antenna port **ANT3** of the radio-frequency LFEM device 20. A second terminal of the third selection switch 305 is connected to the third antenna **Ant3**. The third selection switch 305 is configured to selectively switch on a radio-frequency path between the third antenna **Ant3** and the first switching unit 302 or a radio-frequency path between the third antenna and the radio-frequency LFEM device 20. The first radio-frequency PAMid device 301 is further connected to the radio-frequency transceiver 10, and configured to support reception and transmission of the radio-frequency signal in the first frequency band.

As an example, the first radio-frequency PAMid device 301 can transmit, to the first selection switch 303 via the first switching unit 302, the radio-frequency signal in the first frequency band transmitted by the radio-frequency transceiver 10; switch to the radio-frequency path between the first switching unit 302 and the first antenna **Ant1** via the first selection switch 303; and transmit the radio-frequency signal in the first frequency band via the first antenna **Ant1**. The first radio-frequency PAMid device 301 can transmit, to the second selection switch 304 via the first switching unit 302, the radio-frequency signal in the first frequency band transmitted by the radio-frequency transceiver 10; switch to the radio-frequency path between the first switching unit 302 and the second antenna **Ant2** via the second selection switch 304; and transmit the radio-frequency signal in the first frequency band via the second antenna **Ant2**. The first radio-frequency PA Mid device 301 can transmit, to the third selection switch 305 via the first switching unit 302, the radio-frequency signal in the first frequency band transmitted by the radio-frequency transceiver 10; switch to the radio-frequency path between the first switching unit 302 and the third antenna **Ant3** via the third selection switch 305; and transmit the radio-frequency signal in the first frequency band via the third antenna **Ant3**. The first radio-frequency PA Mid device 301 can transmit, to the fourth antenna **Ant4** via the first switching unit 302, the radio-frequency signal in the first frequency band transmitted by the radio-frequency transceiver 10. The first radio-frequency PA Mid device 301 can further obtain, through the first switching unit 302, the radio-frequency signal in the first frequency band received by the fourth antenna **Ant4,** and transmit the radio-frequency signal in the first frequency band to the radio-frequency transceiver 10. The first antenna **Ant1** and the radio-frequency LFEM device 20 can be selected to be switched on through the first selection switch 303, to enable the radio-frequency LFEM device 20 to receive the processed radio-frequency signal in the first frequency band received by the first antenna **Ant1** and transmit the processed radio-frequency signal in the first frequency band to the radio-frequency transceiver 10. The second antenna **Ant2** and the radio-frequency LFEM device 20 can be selected to be switched on through the second selection switch 304, to enable the radio-frequency LFEM device 20 to receive the processed radio-frequency signal in the first frequency band received by the second antenna **Ant2** and transmit the processed radio-frequency signal in the first frequency band to the radio-frequency transceiver 10. The third antenna **Ant3** and the radio-frequency LFEM device 20 can be selected to be switched on through the third selection switch 305, to enable the radio-frequency LFEM device 20 to receive the processed radio-frequency signal in the first frequency band received by the third antenna **Ant3** and transmit the processed radio-frequency signal in the first frequency band to the radio-frequency transceiver 10.

In an embodiment, the first radio-frequency PAMid device 301 further has a radio-frequency transmitting port **RFIN** and a radio-frequency receiving port **RXOUT.** The radio-frequency transmitting port **RFIN** of the first radio-frequency PAMid device 301 is configured to be connected to the radio-frequency transceiver 10 to receive the radio-frequency signal in the first frequency band transmitted by the radio-frequency transceiver 10. The radio-frequency receiving port **RXOUT** of the first radio-frequency PA Mid device 301 is configured to be connected to the radio-frequency transceiver 10 to output the received radio-frequency signal in the first frequency band to the radio-frequency transceiver 10, and configured to support reception and transmission of the radio-frequency signal in the first frequency band.

In an embodiment, the radio-frequency signal in the first frequency band is a 5G signal in the N41, N77, or N79 frequency band.

The radio-frequency transceiver system based on the above embodiments can support 1T4R 4*4 MIMO function and 1T4R SRS function of four antennas. For example, operation principles of the 4*4 MIMO function of the N41 frequency band are analyzed by taking FIG. 5 as an example.

### TX path:

The transmitted radio-frequency signal is outputted, via a port **TX1 HB2** of the radio-frequency transceiver 10, to the radio-frequency transmitting port **RFIN** of the first radio-frequency PA Mid device 301. The radio-frequency signal is amplified by a power amplifier **PA** and transmitted to a Single Pole Double Throw (SPDT) radio-frequency switch. By switching to a single port via the SPDT radio-frequency switch, the radio-frequency signal is transmitted to the radio-frequency antenna port **ANT** after subjected to filtering of a filter, and transmitted to the first switching unit 302 (Single-Pole Four-Throw (SP4T) radio-frequency switch) via a path **Path1.** The first switching unit 302 is switched to a path **Path2.** The radio-frequency signal is transmitted to the fourth antenna **Ant4** for transmission.

### PRX path:

The received radio-frequency signal enters the antenna group from the fourth antenna **Ant4,** and is transmitted to the first switching unit 302 via the path **Path2.** The first switching unit 302 is switched to the path **Path1.** The radio-frequency signal is transmitted to the radio-frequency antenna port **ANT** of the first radio-frequency PA Mid device 301, and is transmitted to the SPDT radio-frequency switch after subjected to the filtering of the filter. The SPDT radio-frequency switch is switched to the receiving path. The radio-frequency signal is transmitted to the radio-frequency receiving port **RXOUT** after subjected to amplification of the low noise amplifier **LNA,** and enters the radio-frequency transceiver 10 from a port **SDR PRX7.**

### DRX path:

The received radio-frequency signal enters the antenna group from the first antenna **Ant1**, and is transmitted to the first selection switch 303 (SPDT radio-frequency switch) via a path **Path6.** The first selection switch 303 is switched to the first antenna port **ANT1** of the radio-frequency LFEM device 20. The radio-frequency signal is transmitted to the receiving port **RX1** after subjected to the filtering of the first filtering unit 211 and the amplification of the first low noise amplifier **LNA1,** and enters the radio-frequency transceiver 10 from a port **SDR DRX7.**

### PRX MIMO path:

The received radio-frequency signal enters the antenna group from the second antenna **Ant2,** and is transmitted to the second selection switch 304 (SPDT radio-frequency switch) via a path **Path7.** The second selection switch 304 is switched to the second antenna port **ANT2** of the radio-frequency LFEM device 20. The radio-frequency signal is transmitted to the receiving port **RX2** after subjected to the filtering of the first filtering unit 211 and the amplification of the first low noise amplifier **LNA1,** and enters the radio-frequency transceiver 10 from a port **SDR PRX5.**

### DRX MIMO path:

The received radio-frequency signal enters the antenna group from the third antenna **Ant3,** and is transmitted to the third selection switch 305 (SPDT radio-frequency switch) via a path **Path8.** The third selection switch 305 is switched to the third antenna port **ANT3** of the radio-frequency LFEM device 20. The radio-frequency signal is transmitted to the receiving port **RX3** after subjected to the filtering of the first filtering unit 211 and the amplification of the first low noise amplifier **LNA1,** and enters the radio-frequency transceiver 10 from a port **SDR DRX5.**

For example, operation principles of the SRS function of the N41 frequency band are analyzed by taking FIG. 5 as an example.

The transmitted radio-frequency signal is outputted, via the port **TX1 HB2** of the radio-frequency transceiver 10, to the radio-frequency transmitting port **RFIN** of the first radio-frequency PA Mid device 301; the radio-frequency signal is transmitted to the SPDT radio-frequency switch after subjected to the amplification of the power amplifier **PA,** switched to a single port via the SPDT radio-frequency switch, transmitted to the radio-frequency antenna port **ANT** after subjected to the filtering of the filter, and transmitted to the first switching unit 302 (SP4T radio-frequency switch) via the path **Path1.** In one case, the first switching unit 302 is switched to the path **Path2,** and the radio-frequency signal is transmitted to the fourth antenna **Ant4** for transmission. In another case, the transmitted radio-frequency signal is transmitted to the first switching unit 302 via the path **Path1;** the first switching unit 302 is switched to the path **Path3;** the radio-frequency signal is transmitted to the first selection switch 303; the first selection switch 303 is switched to the path **Path6;** and the radio-frequency signal is transmitted to the first antenna **Ant1** for transmission. In yet another case, the transmitted radio-frequency signal is transmitted to the first switching unit 302 via the path **Path1;** the first switching unit 302 is switched to a path **Path4;** the radio-frequency signal is transmitted to the second selection switch 304; the second selection switch 304 is switched to the path **Path7**; and the radio-frequency signal is transmitted to the second antenna **Ant2** for transmission. In still yet another case, the transmitted radio-frequency signal is transmitted to the first switching unit 302 via the path **Path1;** the first switching unit 302 is switched to a path **Path5;** the radio-frequency signal is transmitted to the third selection switch 305; the third selection switch 305 is switched to the path **Path8;** and the radio-frequency signal is transmitted to the third antenna **Ant3** for transmission.

SRS functions of N77 and N79s transmission are similar as that of N41, which are not described in detail herein. Specific path configurations for SRS are shown in Table 1.

**[Table 1] Detailed path configurations for SRS**

| | N41 | N77 | N79 |
|---|---|---|---|
| Channel0 | Path1->Path2 | Path1->Path2 | Path1->Path2 |
| Channel1 | Path1->Path3->Path6 | Path1->Path3->Path6 | Path1->Path3->Path6 |
| Channel2 | Path1->Path4->Path7 | Path1->Path4->Path7 | Path1->Path4->Path7 |
| Channel3 | Path1->Path5->Path8 | Path1->Path5->Path8 | Path1->Path5->Path8 |

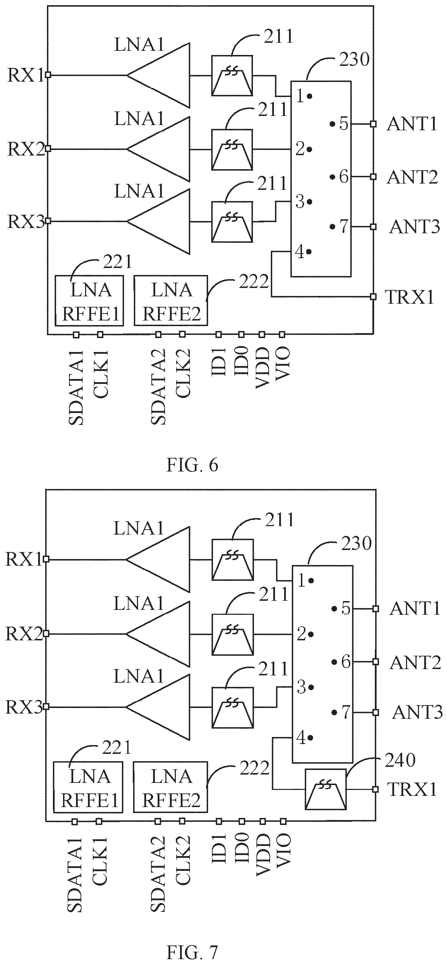

As illustrated in FIG. 6, in an embodiment, the radio-frequency LFEM device 20 further has a first transceiving port **TRX1,** and the radio-frequency LFEM device 20 further includes a second switching unit 230. The second switching unit 230 includes at least four first terminals and at least three second terminals. Four first terminals of the second switching unit 230 are connected to input terminals of the three first receiving circuits 210 and the first transceiving port **TRX1** in one-to-one correspondence, and three second terminals of the second switching unit 230 are connected to the first antenna **Ant1**, the second antenna **Ant2,** and the third antenna **Ant3** in one-to-one correspondence. In this way, a connection between the first antenna port **ANT1,** the second antenna port **ANT2,** or the third antenna port **ANT3** and any one of the first receiving circuits 210 can be selectively switched on to receive the radio-frequency signal via the first antenna port **ANT1,** the second antenna port **ANT2,** or the third antenna port **ANT3;** and further, a connection between the first antenna port **ANT1**, the second antenna port **ANT2,** or the third antenna port **ANT3** and a transmitting path of the radio-frequency LFEM device 20 can be selectively switched on, allowing the radio-frequency signal transmitted by the radio-frequency transceiver 10 to be received via the first transceiving port **TRX1** and the radio-frequency signal transmitted by the radio-frequency transceiver 10 to be transmitted via the first antenna **Ant1**, the second antenna **Ant2,** or the third antenna **Ant3.**

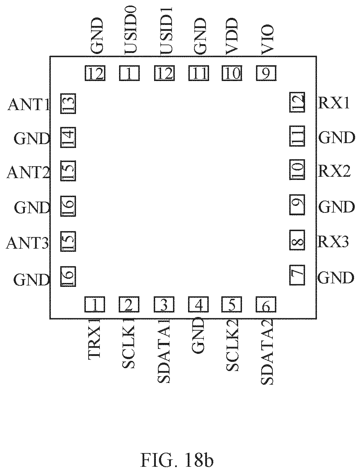

As illustrated in FIG. 18b, in an embodiment, the radio-frequency LFEM device 20 can be regarded as a packaged chip, in which the provided first antenna port **ANT1**, second antenna port **ANT2,** third antenna port **ANT3,** first transceiving port **TRX1,** and receiving port **RX** can be regarded as radio-frequency pin terminals of the radio-frequency LFEM device 20. These radio-frequency pin terminal are used to be connected to external devices.

As illustrated in FIG. 7, in an embodiment, the radio-frequency LFEM device 20 further includes a second filtering unit 240. The second filtering unit 240 is connected to the first transceiving port **TRX1** and the first terminal of the second switching unit 230. That is, the second filtering unit 240 is disposed at a front end of the second switching unit 230. That is, the second filtering unit 240 is disposed between the first transceiving port **TRX1** and the second switching unit 230 and configured to perform filtering processing on the received radio-frequency signal.

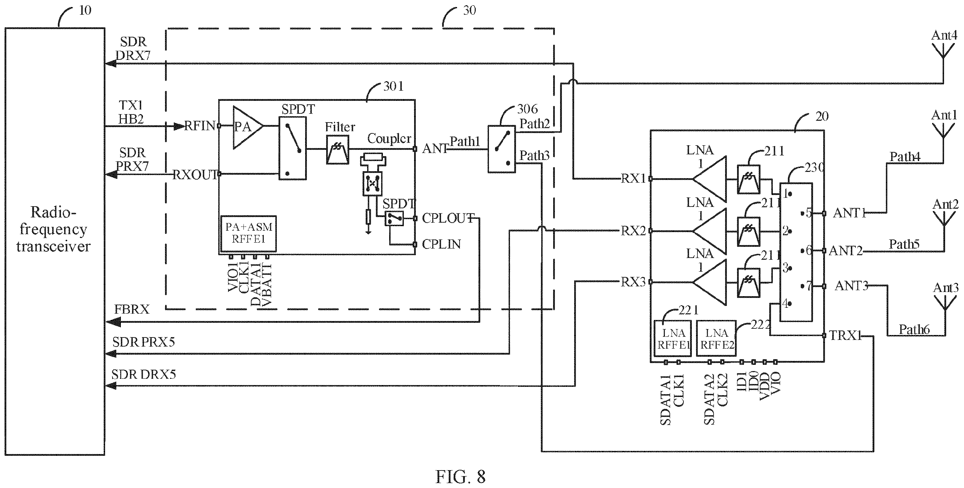

As illustrated in FIG. 8, in an embodiment, the transceiver selection module 30 includes the first radio-frequency PA Mid device 301 and a third switching unit 306. The first radio-frequency PA Mid device 301 has the radio-frequency antenna port **ANT.** The third switching unit 306 has one first terminal and two second terminals. The first terminal of the third switching unit 306 is connected to the radio-frequency antenna port **ANT** of the first radio-frequency PA Mid device 301. The two second terminals of the third switching unit 306 are connected to the fourth antenna **Ant4** and the first transceiving port **TRX1,** respectively. The third switching unit 306 is configured to selectively switch on the radio-frequency path between the fourth antenna **Ant4** and the first radio-frequency PA Mid device 301, or a radio-frequency path between the first transceiving port **TRX1** of the radio-frequency LFEM device 20 and the first radio-frequency PAMid device 301. The first radio-frequency PAMid device 301 is further connected to the radio-frequency transceiver 10 and configured to support reception and transmission of the radio-frequency signal in the first frequency band. As an example, the first radio-frequency PA Mid device 301 can transmit, to the fourth antenna **Ant4** via the third switching unit 306, the radio-frequency signal in the first frequency band transmitted by the radio-frequency transceiver 10; or the first radio-frequency PA Mid device 301 can transmit, to the radio-frequency LFEM device 20 via the third switching unit 306, the radio-frequency signal in the first frequency band transmitted by the radio-frequency transceiver 10, and the radio-frequency signal in the first frequency band is transmitted, via the radio-frequency LFEM device 20, to the first antenna **Ant1**, the second antenna **Ant2,** or the third antenna **Ant3** for transmission, the second antenna **Ant2,** or the third antenna **Ant3.** The first radio-frequency PA Mid device 301 may further receive, via the third switching unit 306, the radio-frequency signal in the first frequency band, which is received and processed by the radio-frequency LFEM device 20 and received by the first antenna **Ant1**, the second antenna **Ant2,** or the third antenna **Ant3;** or the first radio-frequency PAMid device 301 may selectively switch on a path with the fourth antenna **Ant4** via the third switching unit 306 to obtain the radio-frequency signal in the first frequency band received by the fourth antenna **Ant4,** and transmit the radio-frequency signal to the radio-frequency transceiver 10.

The radio-frequency transceiver system based on the above embodiments can support the 1T4R 4*4 MIMO function and 1T4R SRS function of four antennas. For example, the operation principles of the 4*4 MIMO function of the N41 frequency band are analyzed by taking FIG. 8 as an example.

### TX path:

The transmitted radio-frequency signal is outputted, via the port **TX1 HB2** of the radio-frequency transceiver 10, to the radio-frequency transmitting port **RFIN** of the first radio-frequency PA Mid device 301. The radio-frequency signal is transmitted to the SPDT radio-frequency switch after subjected to the amplification of the power amplifier **PA,** switched to a single port via the SPDT radio-frequency switch and transmitted to the radio-frequency antenna port **ANT** after subjected to the filtering of the filter. The radio-frequency signal is transmitted to the third switching unit 306 (SP4T radio-frequency switch) via the path **Path1.** The third switching unit 306 is switched to the path **Path2.** The radio-frequency signal is transmitted to the fourth antenna **Ant4** for transmission.

### PRX path:

The received radio-frequency signal enters the antenna group from the fourth antenna **Ant4,** and is transmitted to the third switching unit 306 via the path **Path2.** The third switching unit 306 is switched to a single port. The radio-frequency signal is transmitted to the radio-frequency antenna port **ANT** of the first radio-frequency PAMid device 301 via the path **Path1,** and transmitted to the SPDT radio-frequency switch after subjected to the filtering of the filter. The SPDT radio-frequency switch is switched to the receiving path. The radio-frequency signal is transmitted to the radio-frequency receiving port **RXOUT** after subjected to the amplification of the low noise amplifier **LNA,** and enters the radio-frequency transceiver 10 from the port **SDR PRX7.**

### DRX path:

The received radio-frequency signal enters the antenna group from the first antenna **Ant1**, is transmitted to the first antenna port **ANT1** of the radio-frequency LFEM device 20 via the path **Path4,** and is switched to a contact 1 via the second switching unit 230 (Four-Pole Triple-Throw (4P3T) radio-frequency switch). The radio-frequency signal is transmitted to the receiving port **RX1** after subjected to the filtering of the first filtering unit 211 and the amplification of the first low noise amplifier **LNA1,** and enters the radio-frequency transceiver 10 from the port **SDR DRX7.**

### PRX MIMO path:

The received radio-frequency signal enters the antenna group from the second antenna **Ant2,** is transmitted to the second antenna port **ANT2** of the radio-frequency LFEM device 20 via the path **Path5,** and is switched to a contact 2 via the second switching unit 230 (4P3T radio-frequency switch). The radio-frequency signal is transmitted to the receiving port **RX1** after subjected to the filtering of the first filtering unit 211 and the amplification of the first low noise amplifier **LNA1,** and enters the radio-frequency transceiver 10 from the port **SDR PRX5.**

### DRX MIMO path:

The received radio-frequency signal enters the antenna group from the third antenna **Ant3,** is transmitted to the third antenna port **ANT3** of the radio-frequency LFEM device 20 via the path **Path6,** and is switched to a contact 3 via the second switching unit 230 (4P3T radio-frequency switch). The radio-frequency signal is transmitted to the receiving port **RX3** after subjected to the filtering of the first filtering unit 211 and the amplification of the first low noise amplifier **LNA1,** and enters the radio-frequency transceiver 10 from the port **SDR DRX5.**

For example, the operation principles of the SRS function of the N41 frequency band are analyzed by taking FIG. 8 as an example.

The transmitted radio-frequency signal is outputted, via the port **TX1 HB2** of the radio-frequency transceiver 10, to the radio-frequency transmitting port **RFIN** of the first radio-frequency PA Mid device 301; the radio-frequency signal is transmitted to the SPDT radio-frequency switch after subjected to the amplification of the power amplifier **PA,** switched to a single port via the SPDT radio-frequency switch, transmitted to the radio-frequency antenna port **ANT** after subjected to the filtering of the filter, and transmitted to the third switching unit 306 (SPDT radio-frequency switch) via the path **Path1.** In one case, the third switching unit 306 is switched to the path **Path2,** and the radio-frequency signal is transmitted to the fourth antenna **Ant4** for transmission. In another case, the transmitted radio-frequency signal is transmitted to the third switching unit 306 via the path **Path1;** the third switching unit 306 is switched to the path **Path3;** the radio-frequency signal is transmitted to the first transceiving port **TRX1** of the radio-frequency LFEM device 20, switched to a contact 5 via the second switching unit 230, and transmitted to the first antenna **Ant1** via the path **Path4** for transmission by the first antenna **Ant1**. In yet another case, the transmitted radio-frequency signal is switched to a contact 6 via the second switching unit 230, and transmitted to the second antenna **Ant2** via the path **Path5** for transmission by the second antenna **Ant2.** In still yet another case, the transmitted radio-frequency signal is switched to a contact 7 via the second switching unit 230, and transmitted to the third antenna **Ant3** via the path **Path6** for transmission by the third antenna **Ant3.**

SRS functions of N77 and N79 transmissions are similar as that of N41, which are not described in detail herein. Specific path configurations for SRS are shown in Table 2.

**[Table 2] Detailed path configurations for SRS**

| | N41 | N77 | N79 |
|---|---|---|---|
| Channel0 | Path1->Path2 | Path1->Path2 | Path1->Path2 |
| Channel1 | Path1->Path3->Path4 | Path1->Path3->Path4 | Path1->Path3->Path4 |
| Channel2 | Path1->Path3->Path5 | Path1->Path3->Path5 | Path1->Path3->Path5 |
| Channel3 | Path1->Path3->Path6 | Path1->Path3->Path6 | Path1->Path3->Path6 |

In the radio-frequency transceiver system as illustrated in FIG. 5 and FIG. 8, the three-channel reception of the radio-frequency signal in the first frequency band can be realized by the radio-frequency LFEM device 20. By integrating and packaging three receiving channels of a radio-frequency signal in a single frequency band in a same chip, an area of a substrate occupied by the respective components can be reduced, thereby saving physical space for other modules for performance optimization and reducing the costs. The radio-frequency LFEM device 20, together with the antenna group and the transceiver selection module 30, can achieve the 4*4 MIMO function in a 1T4R mode, thereby improving the channel capacity of the system and increasing accuracy and an efficiency of channel estimation. In the radio-frequency transceiver system illustrated in FIG. 8, a plurality of SPDT switches external to the radio-frequency LFEM device 20 and used to implement the SRS function can be reduced, thereby further reducing the area of the substrate occupied by the components, saving the costs, and lowering complexity of logic control of the radio-frequency transceiver system.

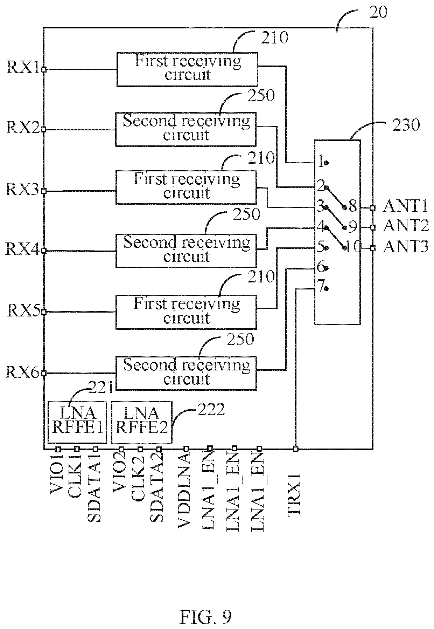

As illustrated in FIG. 9, in an embodiment, the second switching unit 230 includes at least seven first terminals. The radio-frequency LFEM device 20 has at least six receiving ports, and the radio-frequency LFEM device 20 further includes three second receiving circuits 250. Seven first terminals of the second switching unit 230 are connected to the input terminals of the three first receiving circuits 210, the input terminals of the three second receiving circuits 250, and the first transceiving port **TRX1** in one-to-one correspondence. Each second receiving circuit 250 includes a second low noise amplifier. Input terminals of the second low noise amplifiers of the three second receiving circuits 250, as the input terminals of the second receiving circuit 250, are connected to the three first terminals of the second switching unit 230, respectively. The second receiving circuit 250 is configured to support reception and amplification processing on a radio-frequency signal in a second frequency band to allow the radio-frequency LFEM device 20 to further support three-channel reception of the radio-frequency signal in the second frequency band. That is, the radio-frequency LFEM device 20 can support the three-channel reception of both the radio-frequency signal in the first frequency band and the radio-frequency signal in the second frequency band.

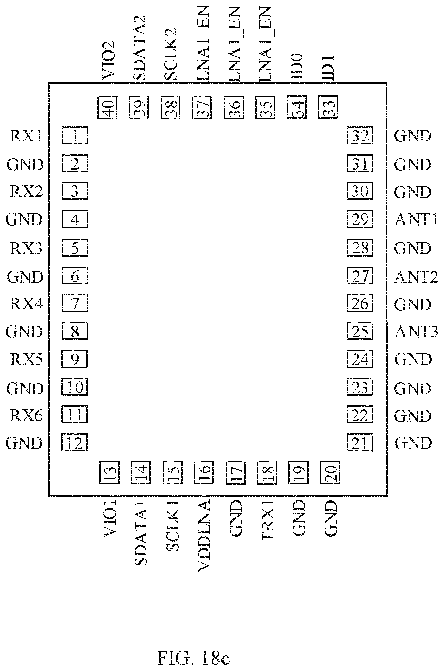

As illustrated in FIG. 18c, in an embodiment, the radio-frequency LFEM device 20 can be regarded as a packaged chip. The first antenna port **ANT1**, the second antenna port **ANT2,** the third antenna port **ANT3,** and the receiving port **RX** in the radio-frequency LFEM device 20 can be regarded as radio-frequency pin terminals of the radio-frequency LFEM device 20, which are used for connecting to external devices.

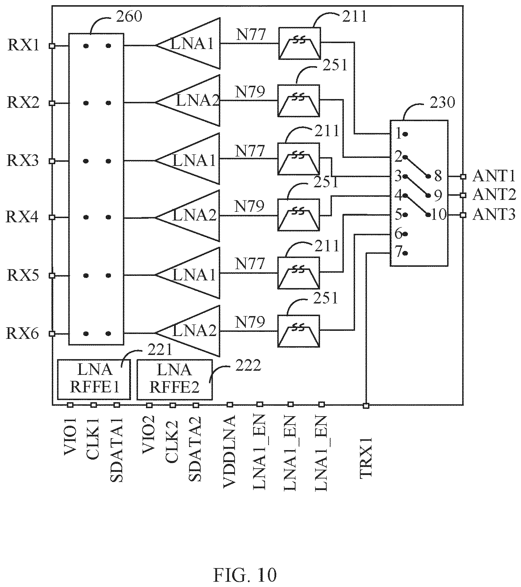

As illustrated in FIG. 10, in an embodiment, the second receiving circuit 250 further includes a third filtering unit 251. The third filtering unit 251 is disposed in a receiving path of the radio-frequency signal in the second frequency band, and configured to perform filtering processing on the received radio-frequency signal in the second frequency band to output the processed radio-frequency signal in the second frequency band to the second low noise amplifier. As an example, the third filtering unit 251 is disposed at a front end of the second switching unit 230. That is, the third filtering unit 251 is disposed between the input terminal of the second low noise amplifier and the second switching unit 230.

As illustrated in FIG. 10, in an embodiment, the radio-frequency LFEM device 20 further includes a fourth switching unit 260. The fourth switching unit 260 includes six first terminals and six second terminals. The six first terminals of the fourth switching unit 260 are connected to six receiving ports **RX** of the radio-frequency LFEM device 20, respectively. The six second terminals of the fourth switching unit 260 are connected to the input terminals of the three first receiving circuits 210 and the input terminals of the three second receiving circuits 250 in one-to-one correspondence. The fourth switching unit 260 is configured to selectively switch on a radio-frequency path between any one of the first receiving circuits 210 and the receiving port **RX** or a radio-frequency path between any one of the second receiving circuits 250 and the receiving port **RX.**

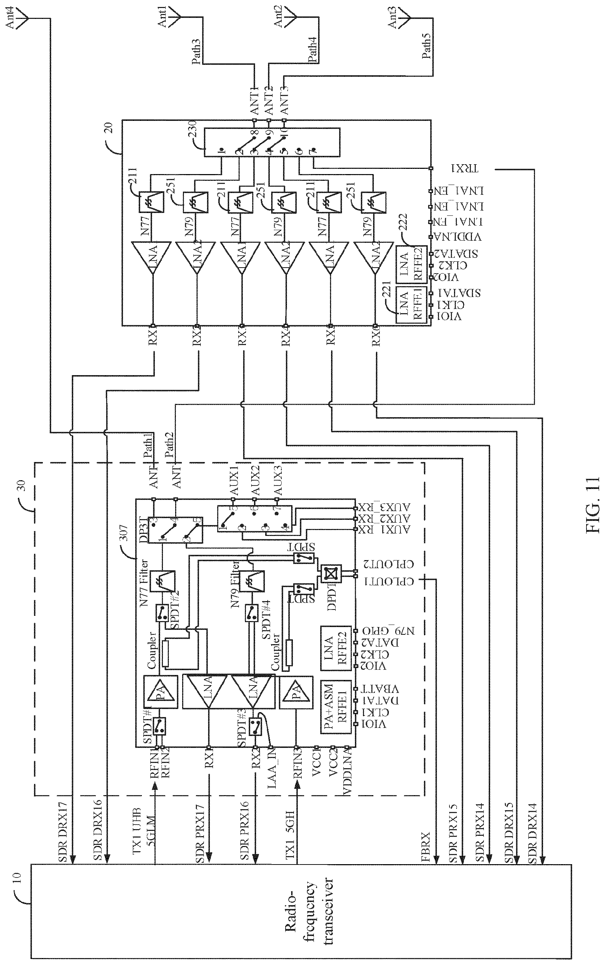

As illustrated in FIG. 11, in an embodiment, the transceiver selection module 30 includes a second radio-frequency PA Mid device 307. The second radio-frequency PA Mid device 307 has two radio-frequency antenna ports **ANT** connected to the fourth antenna and the first transceiving port **TRX1** in one-to-one correspondence. The second radio-frequency PA Mid device 307 is further connected to the radio-frequency transceiver and configured to support reception and transmission of each of the radio-frequency signal in the first frequency band and the radio-frequency signal in the second frequency band. As an example, the second radio-frequency PAMid device 307 can process, by means of the radio-frequency LFEM device 20, the radio-frequency signal in the first frequency band transmitted or in the second frequency band transmitted by the radio-frequency transceiver 10, and then emit the radio-frequency signal through any antenna connected to the radio-frequency LFEM device 20. The second radio-frequency PA Mid device 307 can also directly emit, via the fourth antenna **Ant4,** the radio-frequency signal in the first frequency band or in the second frequency band transmitted by the radio-frequency transceiver 10. The second radio-frequency PA Mid device 307 can further process the radio-frequency signal in the first frequency band or in the second frequency band received by the fourth antenna **Ant4,** and then transmit the radio-frequency signal to the radio-frequency transceiver 10.

In an embodiment, the second radio-frequency PA Mid device 307 further has the radio-frequency transmitting port **RFIN** and the radio-frequency receiving port **RXOUT.** The radio-frequency transmitting port **RFIN** of the second radio-frequency PA Mid device 307 is configured to be connected to the radio-frequency transceiver 10 to receive the radio-frequency signal in the first frequency band and the radio-frequency signal in the second frequency band that are transmitted by the radio-frequency transceiver 10. The radio-frequency receiving port **RXOUT** of the second radio-frequency PAMid device 307 is configured to be connected to the radio-frequency transceiver 10 to output the received radio-frequency signal in the first frequency band and the received radio-frequency signal in the second frequency band to the radio-frequency transceiver 10, for supporting the reception and transmission of both the radio-frequency signal in the first frequency band and the radio-frequency signal in the second frequency band.

In an embodiment, the radio-frequency signal in the first frequency band is a 5G signal in the N77 frequency band, and the radio-frequency signal in the second frequency band is a 5G signal in the N79 frequency band.

The radio-frequency transceiver system based on the above embodiments can support the 1T4R 4*4 MIMO function and 1T4R SRS function of four antennas. For example, operation principles of the 4*4 MIMO function of the N77 frequency band are analyzed by taking FIG. 11 as an example.

### TX path:

The transmitted radio-frequency signal is outputted, via a port **TX1 UHB 5GLM** of the radio-frequency transceiver 10, to one radio-frequency transmitting port **RFIN** of the second radio-frequency PA Mid device 307. The radio-frequency signal is switched to the power amplifier **PA** via an **SPDT#1** radio-frequency switch and amplified by the power amplifier **PA.** The radio-frequency signal is transmitted to an **SPDT#2** radio-frequency switch , switched to a single port via the **SPDT#2** radio-frequency switch, and transmitted to the DP3T radio-frequency switch after subjected to the filtering of the filter. The DP3T radio-frequency switch is switched to the path **Path1** and transmitted to the fourth antenna **Ant4** for transmission.

### PRX path:

The received radio-frequency signal enters the antenna group from the fourth antenna **Ant4,** and is transmitted to the DP3T radio-frequency switch of the second radio-frequency PAMid device 307 via the path **Path1.** The radio-frequency signal is switched to the contact 1 via the DP3T radio-frequency switch, and transmitted to an **SPDT#3** radio-frequency switch after subjected to the filtering of the filter. The **SPDT#3** radio-frequency switch is switched to the receiving path. The radio-frequency signal is transmitted to the radio-frequency receiving port **RXOUT** after subjected to the amplification of the low noise amplifier **LNA,** and enters the radio-frequency transceiver 10 from a port **SDR PRX17.**

### DRX path:

The received radio-frequency signal enters the antenna group from the first antenna **Ant1**, and is transmitted to the first antenna port **ANT1** of the radio-frequency LFEM device 20 via the path **Path3.** The radio-frequency signal is switched to the contact 1 via the second switching unit 230 (Three-Pole Seven-Throw (3P7T) radio-frequency switch), and transmitted to the receiving port **RX1** after subjected to the filtering of the first filtering unit 211 and the amplification of the first low noise amplifier **LNA1.** The radio-frequency signal enters the radio-frequency transceiver 10 from a port **SDR DRX17.**

### PRX MIMO path:

The received radio-frequency signal enters the antenna group from the second antenna **Ant2,** is transmitted to the second antenna port **ANT2** of the radio-frequency LFEM device 20 via the path **Path4.** The radio-frequency signal is switched to the contact 3 via the second switching unit 230 (3P7T radio-frequency switch) and transmitted to the receiving port **RX3** after subjected to the filtering of the first filtering unit 211 and the amplification of the first low noise amplifier **LNA1.** The radio-frequency signal enters the radio-frequency transceiver 10 from a port **SDR PRX15.**

### DRX MIMO path:

The received radio-frequency signal enters the antenna group from the third antenna **Ant3,** and is transmitted to the third antenna port **ANT3** of the radio-frequency LFEM device 20 via the path **Path5.** The radio-frequency signal is switched to the contact 5 via the second switching unit 230 (3P7T radio-frequency switch), and transmitted to the receiving port **RX5** after subjected to the filtering of the first filtering unit 211 and the amplification of the first low noise amplifier **LNA1.** The radio-frequency signal enters the radio-frequency transceiver 10 from a port **SDR DRX15.**

Operation principles of the SRS function of the N77 frequency band are analyzed by taking FIG. 11 as an example.

The transmitted radio-frequency signal is outputted, via a port **TX1 UHB 5GLM** of the radio-frequency transceiver 10, to the radio-frequency transmitting port **RFIN** of the second radio-frequency PA Mid device 307; the radio-frequency signal is switched to the power amplifier **PA** via the **SPDT#1** radio-frequency switch and amplified by the power amplifier **PA,** and transmitted to the **SPDT#2** radio-frequency switch; the radio-frequency signal is switched to a single port via the **SPDT#2** radio-frequency switch, and transmitted to the DP3T radio-frequency switch after subjected to the filtering of the filter. In one case, the DP3T radio-frequency switch is switched to the path **Path1,** and the radio-frequency signal is transmitted to the fourth antenna **Ant4** for transmission. In another case, the DP3T radio-frequency switch is switched to the path **Path2;** and the radio-frequency signal is transmitted to the first transceiving port **TRX1** of the radio-frequency LFEM device 20, switched to the first antenna port **ANT1** via the second switching unit 230, and transmitted to the first antenna **Ant1** via **Path3** for transmission. In yet another case, the DP3T radio-frequency switch is switched to the path **Path2;** and the radio-frequency signal is transmitted to the first transceiving port **TRX1** of the radio-frequency LFEM device 20, switched to the second antenna port **ANT2** via the second switching unit 230, and transmitted to the second antenna **Ant2** via **Path4** for transmission. In still yet another case, the DP3T radio-frequency switch is switched to the path **Path2;** and the radio-frequency signal is transmitted to the first transceiving port **TRX1** of the radio-frequency LFEM device 20, switched to the third antenna port **ANT3** via the second switching unit 230, and transmitted to the third antenna **Ant3** via **Path5** for transmission.

SRS function of N79 transmission is similar as that of N77, which is not described in detail herein. Specific path configurations for SRS are shown in Table 3.

**[Table 3] Detailed path configurations for SRS**

| | N77 | N79 |
|---|---|---|
| Channel0 | Path1 | Path1 |
| Channel1 | Path2->Path3 | Path2->Path3 |
| Channel2 | Path2->Path4 | Path2->Path4 |
| Channel3 | Path2->Path5 | Path2->Path5 |

In the radio-frequency transceiver system as illustrated in FIG. 11, the radio-frequency LFEM device 20 can implement the three-channel reception of the radio-frequency signals in the first frequency band and in the second frequency band. By integrating and packaging six receiving channels in the same chip, an area of a substrate occupied by the respective components can be reduced, thereby saving physical space for other modules for performance optimization and reducing the costs. The radio-frequency LFEM device 20, in combination with the antenna group and the transceiver selection module 30, can achieve the 4*4 MIMO function in the 1T4R mode, thereby improving the channel capacity of the system and increasing the accuracy and efficiency of channel estimation.

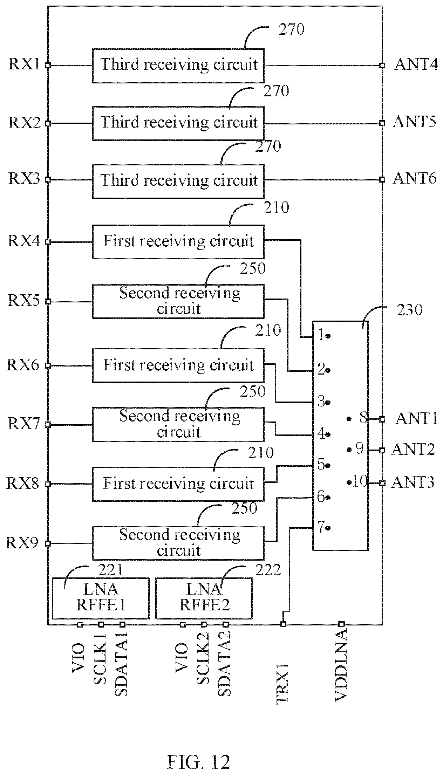

As illustrated in FIG. 12, in an embodiment, the radio-frequency LFEM device 20 has nine receiving ports **RX,** a fourth antenna port **ANT4,** a fifth antenna port **ANTS,** and a sixth antenna port **ANT6,** and the radio-frequency LFEM device 20 further includes three third receiving circuits 270. Output terminals of the three third receiving circuits 270 are connected to three receiving ports **RX** of the radio-frequency LFEM device 20. The third receiving circuit 270 is configured to support reception and amplification processing on a radio-frequency signal in a third frequency band, to allow the radio-frequency LFEM device 20 to support three-channel reception of the radio-frequency signal in the third frequency band. The nine receiving ports **RX** of the radio-frequency LFEM device 20 are connected to the three first receiving circuits 210, the three second receiving circuits 250, and the three third receiving circuits 270 in one-to-one correspondence. That is, the radio-frequency LFEM device 20 can support the three-channel reception of the radio-frequency signals in the first frequency band, the radio-frequency signal in the second frequency band, and the radio-frequency signal in the third frequency band.

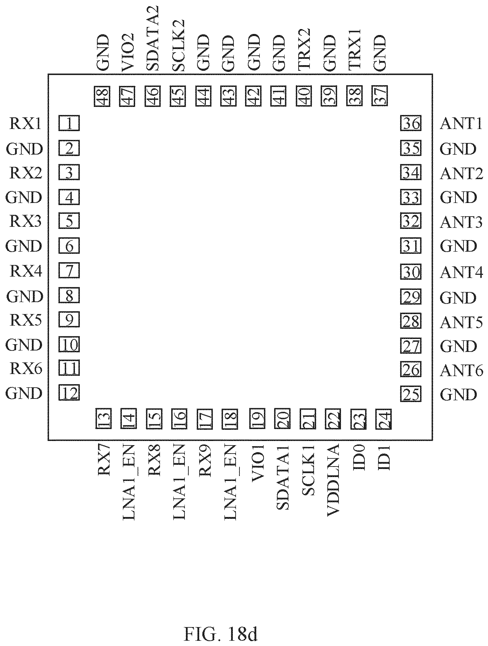

As illustrated in FIG. 18d, in an embodiment, the radio-frequency LFEM device 20 can be regarded as a packaged chip, in which the provided first antenna port **ANT1**, second antenna port **ANT2,** third antenna port **ANT3,** fourth antenna port **ANT4,** fifth antenna port **ANT5,** sixth antenna port **ANT6,** first transceiving port **TRX1,** and receiving port **RX** can be regarded as radio-frequency pin terminals of the radio-frequency LFEM device 20. These radio-frequency pin terminals are used for connecting to external devices.

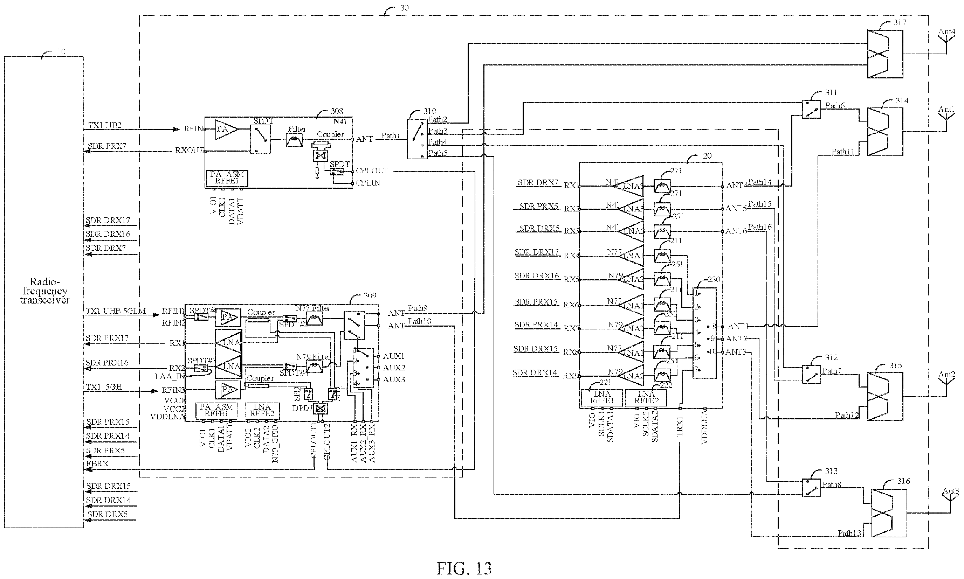

As illustrated in **FIG. 13****,** in an embodiment, the third receiving circuit 270 includes a third low noise amplifier **LNA3.** An output terminal of the third low noise amplifier is connected to the receiving port **RX.** An input terminal of the third low noise amplifier is configured to be connected to the first antenna port **ANT1**, the second antenna port **ANT2,** or the third antenna port **ANT3** to form a receiving path of the radio-frequency signal in the third frequency band.

As illustrated in FIG. 13, in an embodiment, the third receiving circuit 270 further includes a fourth filtering unit 271. The fourth filtering unit 271 is disposed in the receiving path of the radio-frequency signal in the third frequency band, and configured to perform filtering processing on the received radio-frequency signal in the third frequency band to output the processed radio-frequency signal in the third frequency band to the third low noise amplifier.

In an embodiment, the radio-frequency signal in the first frequency band and the radio-frequency signal in the second frequency band are a 5G signal in the N77 frequency band and a 5G signal in the N79 frequency band, respectively, and the radio-frequency signal in the third frequency band is a 5G signal in the N41 frequency band.

As illustrated in FIG. 13, in an embodiment, the transceiver selection module 30 includes a third radio-frequency PA Mid device 308, a fourth radio-frequency PA Mid device 309, a fifth switching unit 310, a fourth selection switch 311, a fifth selection switch 312, a sixth selection switch 313, a first combiner 314, a second combiner 315, a third combiner 316, and a fourth combiner 317. The third radio-frequency PA Mid device 308 has one radio-frequency antenna port **ANT.** The fourth radio-frequency PA Mid device 309 has two radio-frequency antenna ports. The fifth switching unit 310 includes one first terminal and four second terminals. The first terminal of the fifth switching unit 310 is connected to the one radio-frequency antenna port **ANT** of the third radio-frequency PA Mid device 308. Three second terminals of the four second terminals of the fifth switching unit 310 are connected to one first terminal of the fourth selection switch 311, one first terminal of the fifth selection switch 312, and one first terminal of the sixth selection switch 313 in one-to-one correspondence. The remaining second terminal of the fifth switching unit 310 is connected to one of the radio-frequency antenna ports **ANT** of the fourth radio-frequency PA Mid device 309 are connected to the fourth antenna **Ant4** via the fourth combiner 317. The fifth switching unit 310 is configured to selectively switch on a radio-frequency path between the third radio-frequency PAMid device 308 and the first antenna **Ant1**, the second antenna **Ant2,** the third antenna **Ant3,** or the fourth antenna **Ant4.** Another first terminal of the fourth selection switch 311 is connected to the fourth antenna port **ANT4.** The second terminal of the fourth selection switch 311 and the first antenna port **ANT1** are both connected to the first antenna **Ant1** via the first combiner 314. The fourth selection switch 311 is configured to selectively switch on a radio-frequency path between the first antenna **Ant1** and the fifth switching unit 310 or the radio-frequency LFEM device 20. Another first terminal of the fifth selection switch 312 is connected to the fifth antenna port **ANT5.** The second terminal of the fifth selection switch 312 and the second antenna port are both connected to the second antenna **Ant2** via the second combiner 315. The fifth selection switch 312 is configured to selectively switch on a radio-frequency path between the second antenna **Ant2** and the fifth switching unit 310 or the radio-frequency LFEM device 20. Another first terminal of the sixth selection switch 313 is connected to the sixth antenna port **ANT6.** The second terminal of the sixth selection switch 313 and the third antenna port are both connected to the third antenna **Ant3** via the third combiner 316. The sixth selection switch 313 is configured to selectively switch on a radio-frequency path between the third antenna **Ant3** and the sixth switching unit 280 or the radio-frequency LFEM device 20. The third radio-frequency PAMid device 308 is further connected to the radio-frequency transceiver 10 to support reception and transmission of the radio-frequency signal in the third frequency band. The other one of the two radio-frequency antenna ports **ANT** of the fourth radio-frequency PA Mid device 309 is connected to a second transceiving port **TRX2.** The fourth radio-frequency PAMid device 309 is further connected to the radio-frequency transceiver 10 and configured to support reception and transmission of each of the radio-frequency signal in the first frequency band and the radio-frequency signal in the second frequency band.

In an embodiment, the third radio-frequency PA Mid device 308 further has the radio-frequency transmitting port **RFIN** and the radio-frequency receiving port **RXOUT.** The radio-frequency transmitting port **RFIN** of the third radio-frequency PA Mid device 308 is configured to be connected to the radio-frequency transceiver 10 to receive the radio-frequency signal in the third frequency band transmitted by the radio-frequency transceiver 10. The radio-frequency receiving port **RXOUT** of the third radio-frequency PAMid device 308 is configured to be connected to the radio-frequency transceiver 10 to output the received radio-frequency signal in the third frequency band to the radio-frequency transceiver 10, and configured to support the reception and transmission of the radio-frequency signal in the third frequency band.

The fourth radio-frequency PA Mid device 309 further has the radio-frequency transmitting port **RFIN** and the radio-frequency receiving port **RXOUT.** The radio-frequency transmitting port **RFIN** of the fourth radio-frequency PA Mid device 309 is configured to be connected to the radio-frequency transceiver 10 to receive the radio-frequency signal in the first frequency band transmitted or in the second frequency band transmitted by the radio-frequency transceiver 10. The radio-frequency receiving port **RXOUT** of the fourth radio-frequency PA Mid device 309 is configured to be connected to the radio-frequency transceiver 10 to output the received radio-frequency signal in the first frequency band or in the second frequency band to the radio-frequency transceiver 10, and configured to support the reception and transmission of both the radio-frequency signal in the first frequency band and the radio-frequency signal in the second frequency band.

The radio-frequency transceiver system based on the above embodiments can support the IT4R 4*4 MIMO function and 1T4R SRS function of four antennas. For example, the operation principles of the 4*4 MIMO function of the N41 frequency band are analyzed by taking FIG. 13 as an example.

### TX path:

The transmitted radio-frequency signal is outputted, via the port **TX1 HB2** of the radio-frequency transceiver 10, to the radio-frequency transmitting port **RFIN** of the third radio-frequency PA Mid device 308. The radio-frequency signal is transmitted to the SPDT radio-frequency switch after subjected to the amplification of the power amplifier **PA,** switched to a single port via the SPDT radio-frequency switch, transmitted to the radio-frequency antenna port **ANT** after subjected to the filtering of the filter, and transmitted to the fifth switching unit 310 (SP4T radio-frequency switch) via the path **Path1.** The fifth switching unit 310 is switched to the path **Path2.** The radio-frequency signal is transmitted to the fourth antenna **Ant4** via the fourth combiner 317 for transmission by the fourth antenna **Ant4.**

### PRX path:

The received radio-frequency signal enters the fourth combiner 317 from the fourth antenna **Ant4,** and is transmitted to the fifth switching unit 310 via the path **Path2.** The fifth switching unit 310 is switched to a single port. The radio-frequency signal is transmitted to the radio-frequency antenna port **ANT** of the third radio-frequency PA Mid device 308 via the path **Path1,** and transmitted to the SPDT radio-frequency switch after subjected to the filtering of the filter. The SPDT radio-frequency switch is switched to the receiving path. The radio-frequency signal is transmitted to the radio-frequency receiving port **RXOUT** after subjected to the amplification of the low noise amplifier **LNA,** and enters the radio-frequency transceiver 10 from the port SDR PRX7.

### DRX path:

The received radio-frequency signal enters the first combiner 314 from the first antenna **Ant1**, and is transmitted to the fourth selection switch 311 (SPDT radio-frequency switch) via the path **Path6.** The fourth selection switch 311 is switched to a path **Path14.** The radio-frequency signal is transmitted to the fourth antenna port **ANT4,** transmitted to the receiving port **RX1** after subjected to the filtering of the third filtering unit 251 and the amplification of the third low noise amplifier **LNA3,** and enters the radio-frequency transceiver 10 from the port **SDR DRX7.**

### PRX MIMO path:

The received radio-frequency signal enters the second combiner 315 from the second antenna **Ant2,** and is transmitted to the fifth selection switch 312 (SPDT radio-frequency switch) via the path **Path7.** The fifth selection switch 312 is switched to a path **Path15.** The radio-frequency signal is transmitted to the fifth antenna port **ANT5,** is transmitted to the receiving port **RX2** after subjected to the filtering of the third filtering unit 251 and the amplification of the third low noise amplifier **LNA3,** and enters the radio-frequency transceiver 10 from the port **SDR PRX5.**

### DRX MIMO path:

The received radio-frequency signal enters the third combiner 316 from the third antenna **Ant3,** and is transmitted to the sixth selection switch 313 (SPDT radio-frequency switch) via the path **Path8.** The sixth selection switch 313 is switched to a path **Path16.** The radio-frequency signal is transmitted to the sixth antenna port **ANT6,** is transmitted to the receiving port **RX3** after subjected to the filtering of the third filtering unit 251 and the amplification of the third low noise amplifier **LNA3,** and enters the radio-frequency transceiver 10 from the port **SDR DRX5.**

For example, the operation principles of the SRS function of the N41 frequency band are analyzed by taking FIG. 13 as an example.

The transmitted radio-frequency signal is outputted, via the port **TX1 HB2** of the radio-frequency transceiver 10, to the radio-frequency transmitting port **RFIN** of the third radio-frequency PA Mid device 301. The radio-frequency signal is transmitted to the SPDT radio-frequency switch after subjected to the amplification of the power amplifier **PA,** switched to a single port via the SPDT radio-frequency switch, and transmitted to the radio-frequency antenna port **ANT** after subjected to the filtering of the filter. In one case, the radio-frequency signal is transmitted to the fifth switching unit 310 (SP4T radio-frequency switch) via the path **Path1;** the fifth switching unit 310 is switched to the path **Path2;** and the radio-frequency signal is transmitted to the fourth antenna **Ant4** for transmission via the fourth combiner 317. In another case, the radio-frequency signal is transmitted to the fifth switching unit 310 via the path **Path1;** the fifth switching unit 310 is switched to the path **Path3;** and the radio-frequency signal is transmitted to the fourth selection switch 311, switched to **Path6** via the fourth selection switch 311, and transmitted to the first antenna **Ant1** for transmission via the first combiner 314. In yet another case, the radio-frequency signal is transmitted to the fifth switching unit 310 via the path **Path1;** the fifth switching unit 310 is switched to the path **Path4;** and the radio-frequency signal is transmitted to the fifth selection switch 312, switched to **Path7** via the fifth selection switch 312, and transmitted to the second antenna **Ant2** for transmission via the second combiner 315. In still yet another case, the radio-frequency signal is transmitted to the fifth switching unit 310 via the path **Path1;** the fifth switching unit 310 is switched to the path **Path5;** and the radio-frequency signal is transmitted to the sixth selection switch 313, switched to **Path8** via the sixth selection switch 313, and transmitted to the third antenna **Ant3** for transmission via the third combiner 316.

SRS functions of N77 and N79 transmissions are similar as that of N41, which are not described in detail herein. Specific path configurations for SRS are shown in Table 4.

**[Table 4] Detailed path configurations for SRS**

| | N41 | N77 | N79 |
|---|---|---|---|
| Channel0 | Path1->Path2 | Path9 | Path9 |
| Channel1 | Path1->Path3->Path6 | Path10->Path11 | Path10->Path11 |
| Channel2 | Path1->Path4->Path7 | Path10->Path12 | Path10->Path12 |
| Channel3 | Path1->Path5->Path8 | Path10->Path13 | Path10->Path13 |

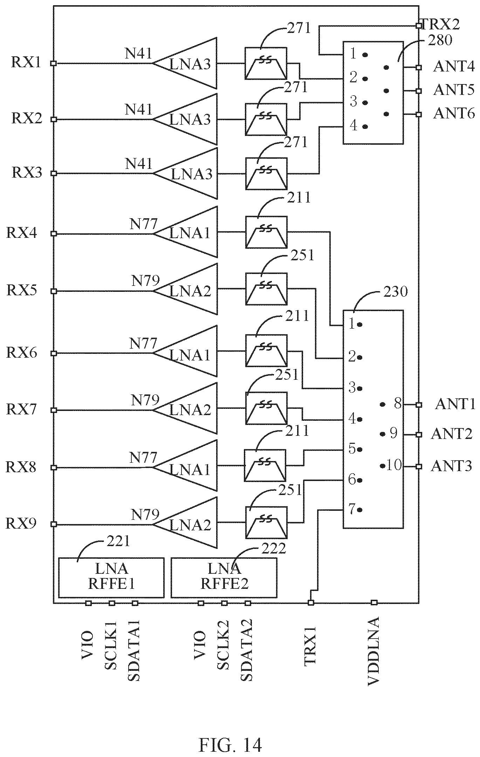

As illustrated in FIG. 14, in an embodiment, the radio-frequency LFEM device 20 further has a second transceiving port, a fourth antenna port, a fifth antenna port, and a sixth antenna port, and the radio-frequency LFEM device 20 further includes a sixth switching unit 280. The sixth switching unit 280 includes four first terminals and three second terminals. The four first terminals of the sixth switching unit 280 are connected to input terminals of the three third receiving circuits 270 and the second transceiving port TRX2 in one-to-one correspondence. The three second terminals of the sixth switching unit 280 are connected to the fourth antenna port **ANT4,** the fifth antenna port **ANT5,** and the sixth antenna port **ANT6** in one-to-one correspondence. The sixth switching unit 280 is configured to selectively switch on a receiving path between any one of the third receiving circuits 270 and the fourth antenna port **ANT4,** the fifth antenna port ANT5, or the sixth antenna port ANT6, or a transmitting path between the second transceiving port **TRX2** and the fourth antenna port **ANT4,** the fifth antenna port **ANT5,** or the sixth antenna port **ANT6.**

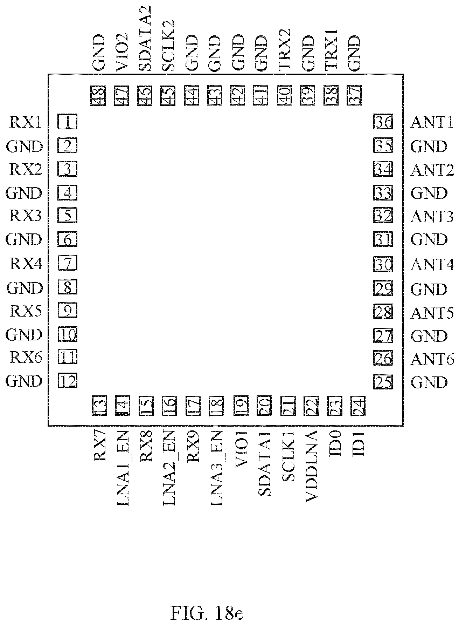

As illustrated in FIG. 18e, in an embodiment, the radio-frequency LFEM device 20 can be regarded as a packaged chip, in which the provided first antenna port **ANT1**, second antenna port **ANT2,** third antenna port **ANT3,** fourth antenna port **ANT4,** fifth antenna port **ANT5,** sixth antenna port **ANT6,** first transceiving port **TRX1,** second transceiving port **TRX2,** and receiving port **RX** can be regarded as radio-frequency pin terminals of the radio-frequency LFEM device 20. The radio-frequency pin terminals are used for connecting to external devices.

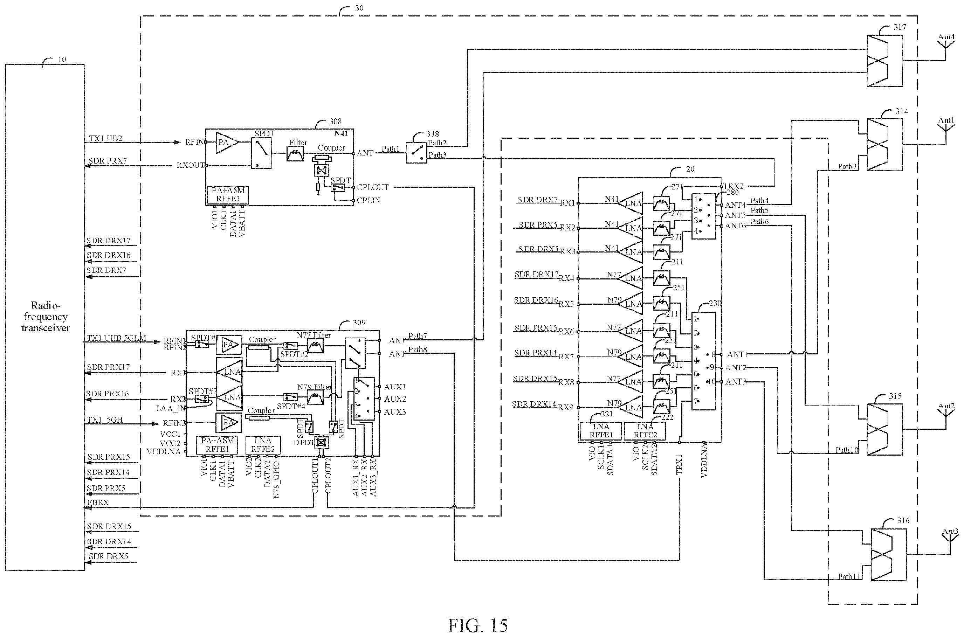

As illustrated in FIG. 15, in an embodiment, the transceiver selection module 30 includes a third radio-frequency PA Mid device 308, a fourth radio-frequency PA Mid device 309, a seventh switching unit 318, a first combiner 314, a second combiner 315, a third combiner 316, and a fourth combiner 317. The third radio-frequency PA Mid device 308 has one radio-frequency antenna port **ANT.** The fourth radio-frequency PA Mid device 309 has two radio-frequency antenna ports **ANT.** The seventh switching unit 318 includes one first terminal and two second terminals. The first terminal of the seventh switching unit 318 is connected to the radio-frequency antenna port **ANT** of the third radio-frequency PAMid device 308. One of the second terminals of the seventh switching unit 318 is connected to the second transceiving port **TRX2,** and the other one of the second terminals of the seventh switching unit 318 and one of the radio-frequency antenna ports **ANT** of the fourth radio-frequency PAMid device 309 are both connected to the fourth antenna **Ant4** via the fourth combiner 317. The first antenna port **ANT1** and the fourth antenna port **ANT4** of the radio-frequency LFEM device 20 are both connected to the first antenna **Ant1** via the first combiner 314. The second antenna port **ANT2** and the fifth antenna port **ANT5** of the radio-frequency LFEM device 20 are both connected to the second antenna **Ant2** via the second combiner 315. The third antenna port **ANT3** and the sixth antenna port **ANT6** of the radio-frequency LFEM device 20 are both connected to the third antenna **Ant3** via the third combiner 316. The third radio-frequency PAMid device 308 is further connected to the radio-frequency transceiver 10 and configured to support the reception and transmission of the radio-frequency signal in the third frequency band. The other one of the two radio-frequency antenna ports **ANT** of the fourth radio-frequency PA Mid device 309 is connected to the first transceiving port **TRX1.** The fourth radio-frequency PA Mid device 309 is further connected to the radio-frequency transceiver 10 and configured to support the reception and transmission of both the radio-frequency signal in the first frequency band and the radio-frequency signal in the second frequency band.

The radio-frequency transceiver system based on the above embodiments can support the 1T4R 4*4 MIMO function and 1T4R SRS function of four antennas. For example, the operation principles of the 4*4 MIMO function of the N41 frequency band are analyzed by taking FIG. 15 as an example.

### TX path:

The transmitted radio-frequency signal is outputted, via the port **TX1 HB2** of the radio-frequency transceiver 10, to the radio-frequency transmitting port **RFIN** of the third radio-frequency PA Mid device 308. The radio-frequency signal is transmitted to the SPDT radio-frequency switch after subj ected to the amplification of the power amplifier **PA,** switched to a single port via the SPDT radio-frequency switch, transmitted to the radio-frequency antenna port **ANT** after subjected to the filtering of the filter, and transmitted to the seventh switching unit 318 (SPDT radio-frequency switch) via the path **Path1.** The seventh switching unit 318 is switched to the path **Path2.** The radio-frequency signal is transmitted to the fourth antenna Ant4 for transmission via the fourth combiner 317.

### PRX path:

The received radio-frequency signal enters the fourth combiner 317 from the fourth antenna **Ant4,** and is transmitted to the seventh switching unit 318 via the path **Path2.** The seventh switching unit 318 is switched to a single port. The radio-frequency signal is transmitted to the radio-frequency antenna port **ANT** of the third radio-frequency PA Mid device 308 via the path **Path1,** and transmitted to the SPDT radio-frequency switch after subjected to the filtering of the filter. The SPDT radio-frequency switch is switched to the receiving path. The radio-frequency signal is transmitted to the radio-frequency receiving port **RXOUT** after subjected to the amplification of the low noise amplifier **LNA,** and enters the radio-frequency transceiver 10 from the port **SDR PRX7.**

### DRX path:

The received radio-frequency signal enters the first combiner 314 from the first antenna **Ant1**, and is transmitted to the fourth antenna port **ANT4** of the radio-frequency LFEM device 20 via the path **Path4.** The radio-frequency signal is switched to the contact 2 via the sixth switching unit 280 (3P4T radio-frequency switch), transmitted to the receiving port **RX1** after subjected to the filtering of the third filtering unit 251 and the amplification of the third low noise amplifier **LNA3,** and enters the radio-frequency transceiver 10 from the port **SDR DRX7.**

### PRX MIMO path:

The received radio-frequency signal enters the second combiner 315 from the second antenna **Ant2,** and is transmitted to the fifth antenna port **ANT5** of the radio-frequency LFEM device 20 via the path **Path5.** The radio-frequency signal is switched to the contact 3 via the sixth switching unit 280 (3P4T radio-frequency switch), transmitted to the receiving port **RX2** after subjected to the filtering of the third filtering unit 251 and the amplification of the third low noise amplifier **LNA3,** and enters the radio-frequency transceiver 10 from the port **SDR PRX5.**

### DRX MIMO path:

The received radio-frequency signal enters the third combiner 316 from the third antenna **Ant3,** and is transmitted to the sixth antenna port **ANT6** of the radio-frequency LFEM device 20 via the path **Path7.** The radio-frequency signal is switched to a contact 4 via a sixth switching circuit (3P4T radio-frequency switch), transmitted to the receiving port **RX3** after subjected to amplification of the third filtering unit 251 and the third low noise amplifier **LNA3,** and enters the radio-frequency transceiver 10 from the port **SDR DRX5.**

The operation principles of the SRS function of the N41 frequency band are analyzed by taking FIG. 15 as an example.

The transmitted radio-frequency signal is outputted, via the port **TX1 HB2** of the radio-frequency transceiver 10, to the radio-frequency transmitting port **RFIN** of the third radio-frequency PA Mid device 308. The radio-frequency signal is transmitted to the SPDT radio-frequency switch after subjected to the amplification of the power amplifier **PA,** and switched to a single port via the SPDT radio-frequency switch. The radio-frequency signal is transmitted to the radio-frequency antenna port **ANT** after subjected to the filtering of the filter. In one case, the radio-frequency signal is transmitted to the seventh switching unit 318 (SPDT radio-frequency switch) via the path **Path1;** the seventh switching unit 318 is switched to the path **Path2;** and the radio-frequency signal is transmitted to the fourth antenna **Ant4** for transmission via the fourth combiner 317. In another case, the radio-frequency signal is transmitted to the seventh switching unit 318 via the path **Path1;** the seventh switching unit 318 is switched to the path **Path3;** the radio-frequency signal is transmitted to the second transceiving port **TRX2** of the radio-frequency LFEM device 20, switched to the path **Path4** via the sixth switching unit 280, and is transmitted to the first antenna **Ant1** for transmission via the first combiner 314. In yet another case, the radio-frequency signal is switched to the path **Path5** via the sixth switching unit 280, and transmitted to the second antenna **Ant2** for transmission via the second combiner 315. In still yet another case, the radio-frequency signal is switched to the path **Path6** via the sixth switching unit 280, and transmitted to the third antenna **Ant3** for transmission via the third combiner 316.

SRS functions of N77 and N79 transmissions are similar as that of N41, which are not described in detail herein. Specific path configurations for SRS are shown in Table 5.

**[Table 5] Detailed path configurations for SRS**

| | N41 | N77 | N79 |
|---|---|---|---|
| Channel0 | Path1->Path2 | Path7 | Path7 |
| Channel1 | Path1->Path3->Path4 | Path8->Path9 | Path8->Path9 |
| Channel2 | Path1->Path3->Path5 | Path8->Path10 | Path8->Path10 |
| Channel3 | Path1->Path3->Path6 | Path8->Path11 | Path8->Path11 |

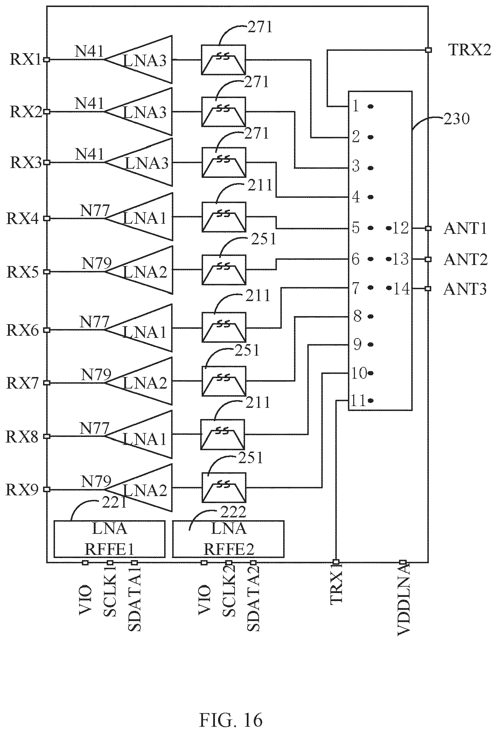

As illustrated in FIG. 16, in an embodiment, the radio-frequency LFEM device 20 further has the second transceiving port. The second switching unit 230 includes eleven first terminals. The eleven first terminals of the second switching unit 230 are connected to the input terminals of the three first receiving circuits 210, the input terminals of the three second receiving circuits 250, input terminals of three third circuits, the first transceiving port **TRX1,** and the second transceiving port **TRX2** in one-to-one correspondence. The second switching unit 230 is configured to selectively switch on a receiving path where any of the first receiving circuits 210, any of the second receiving circuits 250, or any of the third receiving circuits 270 is located, or a transmitting path where the first transceiving port **TRX1** or the second transceiving port TRX2 is located.

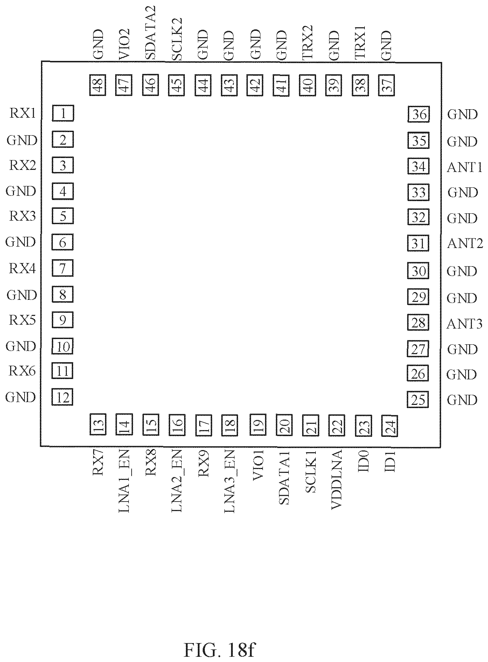

As illustrated in FIG. 18f, in an embodiment, the radio-frequency LFEM device 20 can be regarded as a packaged chip, in which the provided first antenna port **ANT1**, second antenna port **ANT2,** third antenna port **ANT3,** first transceiving port **TRX1,** second transceiving port **TRX2,** and receiving port **RX** can be regarded as radio-frequency pin terminals of the radio-frequency LFEM device 20. These radio-frequency pin terminals are used for connecting to external devices.

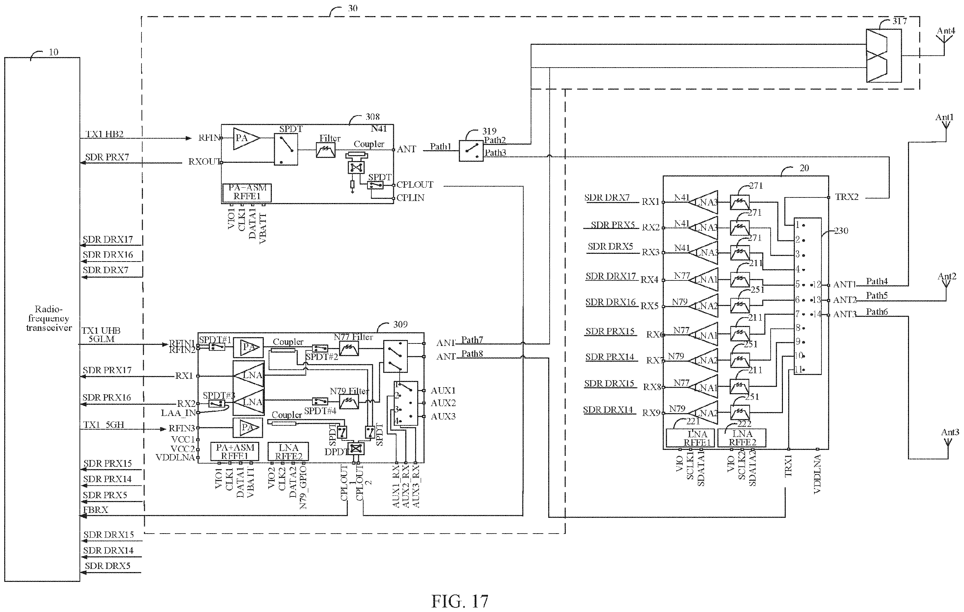

As illustrated in FIG. 17, in an embodiment, the transceiver selection module 30 includes a third radio-frequency PA Mid device 308, a fourth radio-frequency PA Mid device 309, an eighth switching unit 319, and a fourth combiner 317. The third radio-frequency PA Mid device 308 has one radio-frequency antenna port **ANT.** The fourth radio-frequency PAMid device 309 has two radio-frequency antenna ports **ANT.** The eighth switching unit 319 includes one first terminal and two second terminals. The first terminal of the eighth switching unit 319 is connected to the radio-frequency antenna port **ANT** of the third radio-frequency PA Mid device 308. One of the two second terminals of the eighth switching unit 319 is connected to the second transceiving port **TRX2;** and the other one of the two second terminals of the eighth switching unit 319 and one of the two radio-frequency antenna ports **ANT** of the fourth radio-frequency PA Mid device 309 are both connected to the fourth antenna **Ant4** via the fourth combiner 317. The eighth switching unit 319 is configured to selectively switch on a radio-frequency path between the third radio-frequency PA Mid device 308 and the fourth combiner 317 or the radio-frequency LFEM device 20. The third radio-frequency PA Mid device 308 is further connected to the radio-frequency transceiver 10, and configured to support the reception and transmission of the radio-frequency signal in the third frequency band. The other one of the two radio-frequency antenna ports **ANT** of the fourth radio-frequency PA Mid device 309 is connected to the first transceiving port **TRX1.** The fourth radio-frequency PA Mid device 309 is further connected to the radio-frequency transceiver 10, and configured to support the reception and transmission of both the radio-frequency signal in the first frequency band and the radio-frequency signal in the second frequency band.

The radio-frequency transceiver system based on the above embodiments can support the 1T4R 4*4 MIMO function and 1T4R SRS function of four antennas. For example, the operation principles of the 4*4 MIMO function of the N41 frequency band are analyzed by taking FIG. 17 as an example.

### TX path:

The transmitted radio-frequency signal is outputted, via the port **TX1 HB2** of the radio-frequency transceiver 10, to the radio-frequency transmitting port **RFIN** of the third radio-frequency PA Mid device 308. The radio-frequency signal is transmitted to the SPDT radio-frequency switch after subj ected to the amplification of the power amplifier **PA,** switched to a single port via the SPDT radio-frequency switch, transmitted to the radio-frequency antenna port **ANT** after subjected to the filtering of the filter, and transmitted to the eighth switching unit 319 (SPDT radio-frequency switch) via the path **Path1.** The eighth switching unit 319 is switched to the path **Path2.** The radio-frequency signal is transmitted to the fourth antenna **Ant4** for transmission via the fourth combiner 317.

### PRX path:

The received radio-frequency signal enters the fourth combiner 317 from the fourth antenna **Ant4,** and is transmitted to the eighth switching unit 319 via the path **Path2.** The eighth switching unit 319 is switched to a single port. The radio-frequency signal is transmitted to the radio-frequency antenna port **ANT** of the third radio-frequency PAMid device 308 via the path **Path1,** and transmitted to the SPDT radio-frequency switch after subjected to the filtering of the filter. The SPDT radio-frequency switch is switched to the receiving path. The radio-frequency signal is transmitted to the radio-frequency receiving port **RXOUT** after subjected to the amplification of the low noise amplifier **LNA,** and enters the radio-frequency transceiver 10 from the port **SDR PRX7.**

### DRX path:

The received radio-frequency signal enters the antenna group from the first antenna **Ant1**, and is transmitted to the first antenna port **ANT1** of the radio-frequency LFEM device 20 via the path **Path4.** The radio-frequency signal is switched to the contact 2 via the second switching unit 230 (Three-Pole Eleven-Throw (3P11T) radio-frequency switch), transmitted to the receiving port **RX1** after subjected to the filtering of the third filtering unit 251 and the amplification of the third low noise amplifier **LNA3,** and enters the radio-frequency transceiver 10 from the port **SDR DRX7.**

### PRX MIMO path:

The received radio-frequency signal enters the antenna group from the second antenna **Ant2,** and is transmitted to the second antenna port **ANT2** of the radio-frequency LFEM device 20 via the path **Path5.** The radio-frequency signal is switched to the contact 3 via the second switching unit 230, transmitted to the receiving port **RX2** after subjected to the filtering of the third filtering unit 251 and the amplification of the third low noise amplifier **LNA3,** and enters the radio-frequency transceiver 10 from the port **SDR PRX5.**

### DRX MIMO path:

The received radio-frequency signal enters the antenna group from the third antenna **Ant3,** and is transmitted to the third antenna port **ANT3** of the radio-frequency LFEM device 20 via the path **Path6.** The radio-frequency signal is switched to the contact 4 via the second switching unit 230, transmitted to the receiving port **RX3** after subjected to the filtering of the third filtering unit 251 and the amplification of the third low noise amplifier **LNA3,** and enters the radio-frequency transceiver 10 from the port **SDR DRX5.**

The operation principles of the SRS function of the N41 frequency band are analyzed by taking FIG. 17 as an example.

The transmitted radio-frequency signal is outputted, via the port **TX1 HB2** of the radio-frequency transceiver 10, to the radio-frequency transmitting port **RFIN** of the third radio-frequency PA Mid device 308. The radio-frequency signal is transmitted to the SPDT radio-frequency switch after subjected to the amplification of the power amplifier **PA,** switched to a single port via the SPDT radio-frequency switch, and transmitted to the radio-frequency antenna port **ANT** after subjected to the filtering of the filter. The radio-frequency signal is transmitted to the eighth switching unit 319 (SPDT radio-frequency switch) via the path **Path1.** In one case, the eighth switching unit 319 is switched to the path **Path2;** and the radio-frequency signal is transmitted to the fourth antenna **Ant4** for transmission via the fourth combiner 317. In another case, the eighth switching unit 319 is switched to the path **Path3;** and the radio-frequency signal is transmitted to the second transceiving port **TRX2** of the radio-frequency LFEM device 20, switched to the first antenna port **ANT1** via the second switching unit 230, and transmitted to the first antenna **Ant1** for transmission via the path **Path4.** In yet another case, the radio-frequency signal is switched to the second antenna port **ANT2** via the second switching unit 230, and transmitted to the second antenna **Ant2** for transmission via the path **Path5.** In still yet another case, the radio-frequency signal is switched to the third antenna port **ANT3** via the second switching unit 230, and transmitted to the third antenna **Ant3** for transmission via the path **Path6.**

SRS functions of N77 and N79 transmissions are similar as that of N41, which are not described in detail herein. Specific path configurations for SRS are shown in Table 6.

**[Table 6] Detailed path configurations for SRS**

| | N41 | N77 | N79 |
|---|---|---|---|
| Channel0 | Path1->Path2 | Path7 | Path7 |
| Channel1 | Path1->Path3->Path4 | Path8->Path4 | Path8->Path4 |
| Channel2 | Path1->Path3->Path5 | Path8->Path5 | Path8->Path5 |
| Channel3 | Path1->Path3->Path6 | Path8->Path6 | Path8->Path6 |

In the radio-frequency transceiver systems as illustrated in FIG. 13, FIG. 15, and FIG. 17, the radio-frequency LFEM device 20 can implement three-channel reception of radio-frequency signals in three frequency bands. By integrating and packaging nine receiving channels in the same chip, the area of the substrate occupied by the respective components can be reduced, thereby saving the physical space for other modules for performance optimization and reducing the costs. The radio-frequency LFEM device 20, in combination with the antenna group and the transceiver selection module 30, can achieve the 4*4 MIMO function in the 1T4R mode, thereby improving the channel capacity of the system and increasing the accuracy and efficiency of channel estimation. In the radio-frequency transceiver system as illustrated in FIG. 15, the three SPDT radio-frequency switches used to implement the SRS function can be saved, thereby reducing the area of the substrate occupied by the components of the radio-frequency transceiver system, saving the costs, and lowering the complexity of the logic control of the radio-frequency transceiver system. In the radio-frequency transceiver system as illustrated in FIG. 17, the 3P4T radio-frequency switch and the 3P7T radio-frequency switch are integrated as the 3P11T radio-frequency switch, an integration level of the components can be further increased, thereby reducing the area of the substrate occupied by the components inside the radio-frequency LFEM device 20 and lowering the complexity of the logic control inside the radio-frequency LFEM device 20.

As illustrated in FIG. 5, in an embodiment, the radio-frequency LFEM device 20 further includes a first control unit 221 and a second control unit 222, which are both connected to the first receiving circuit 210 and configured to adjust a gain coefficient of the first low noise amplifier **LNA1** to reduce a link loss of the receiving path. As illustrated in FIG. 7, in an embodiment, the second control unit 222 is connected to the second switching unit 230 and configured to control the second switching unit 230, to selectively switch on a transceiving path of the radio-frequency signal in the first frequency band. As illustrated in FIG. 9, in an embodiment, the first control unit 221 is further connected to the second receiving circuit 250 and configured to adjust a gain coefficient of the second low noise amplifier **LNA2** to reduce a link loss of the receiving path. As illustrated in FIG. 12, in an embodiment, the first control unit 221 is further connected to the third receiving circuit 270 and configured to adjust a gain coefficient of the third low noise amplifier **LNA3** to reduce the link loss of the receiving path.

As an example, the first control unit 221 and the second control unit 222 may be each a Mobile Industry Processor Interface (MIPI)-Radio Frequency Front End Control Interface (RFFE) control unit, or an RFFE control unit, which conforms to control protocols of an RFFE bus. When the first control unit 221 and the second control unit 222 are each an MIPI-RFFE control unit or an RFFE control unit, a radio-frequency Low Noise Amplifier plus PA Mid (L-PAMid) device of each of the first control unit 221 and the second control unit 222 may further have an input pin **CLK** for clock signals, an input or bidirectional pin **SDATAS** for unidirectional/bidirectional data signals, a power pin **VDD,** a reference voltage pin **VIO,** etc.

The embodiments of the present disclosure further provide a communication device. The communication device has the radio-frequency transceiver system according to any of the above embodiments.

By providing the radio-frequency transceiver system on the communication device, the integration level of the radio-frequency transceiver system can be increased, and the area of the substrate occupied by components in the radio-frequency transceiver system can be reduced. In addition, the power supply, logic control, and Printed Circuit Board (PCB) layout and wirings of the radio-frequency LFEM device 20 can be simplified, thereby saving the costs.

Reference throughout this specification to "some embodiments", "other embodiments", "ideal embodiments", etc., means that a particular feature, structure, material, or characteristic described in connection with the embodiment or example is included in at least one embodiment or example of the present disclosure. The appearances of the above phrases in various places throughout this specification are not necessarily referring to the same embodiment or example.

The technical features of the above-mentioned embodiments may be arbitrarily combined. For brevity of description, not all possible combinations of individual technical features of the above-mentioned embodiments are described. The combinations of these technical features shall be construed as falling within the scope of the present disclosure, unless they contradict with each other.

Although several embodiments of the present disclosure have been described above in a specific and detailed manner, the protection scope of the present disclosure cannot be construed as being limited to these embodiments. It should be noted that, those skilled in the art can make various variants and improvements without departing from the concept of the present disclosure, and these variants and improvements shall fall within the protection scope of present disclosure as defined by the claims as attached.

## Claims

1. A radio-frequency transceiver system, comprising:
a radio-frequency transceiver;
an antenna group comprising a first antenna, a second antenna, a third antenna, and a fourth antenna, the antenna group being configured to support reception and/or transmission of a radio-frequency signal;
a radio-frequency Low noise amplifier Front-End Module (LFEM) device at least having a first antenna port configured to be connected to the first antenna, a second antenna port configured to be connected to the second antenna, a third antenna port configured to be connected to the third antenna, and at least three receiving ports configured to be connected to the radio-frequency transceiver, wherein the radio-frequency LFEM device is configured to support three-channel reception of at least one frequency band; and
a transceiver selection module connected to the radio-frequency transceiver, the radio-frequency LFEM device, the first antenna, the second antenna, the third antenna, and the fourth antenna, wherein the transceiver selection module is configured to support a transmission or reception selection of the at least one frequency band, enabling the radio-frequency transceiver system to implement a 4*4 Multiple-Input Multiple-Output (MIMO) function for the at least one radio-frequency signal.

2. The radio-frequency transceiver system according to claim 1, wherein the radio-frequency LFEM device at least comprises three first receiving circuits, wherein:
output terminals of the three first receiving circuits are connected to three receiving ports of the at least three receiving ports, respectively; and
the three first receiving circuits are configured to support reception and amplification processing on the at least one radio-frequency signal in a first frequency band, enabling the radio-frequency LFEM device to support three-channel reception of the radio-frequency signal in the first frequency band.

3. The radio-frequency transceiver system according to claim 2, wherein:
each of the three first receiving circuits comprises a first low noise amplifier;
an output terminal of the first low noise amplifier is connected to one of the at least three receiving ports; and
an input terminal of the first low noise amplifier is configured to be connected to the first antenna port, the second antenna port, or the third antenna port to form a receiving path of the radio-frequency signal in the first frequency band.

4. The radio-frequency transceiver system according to claim 3, wherein each of the three first receiving circuits further comprises:
a first filtering unit disposed in the receiving path of the radio-frequency signal in the first frequency band, and configured to perform filtering processing on the received radio-frequency signal in the first frequency band to output the processed radio-frequency signal in the first frequency band to the first low noise amplifier.

5. The radio-frequency transceiver system according to claim 2, wherein:
respective input terminals of the three first receiving circuits are connected to the first antenna port, the second antenna port, and the third antenna port in one-to-one correspondence;
the transceiver selection module comprises a first radio-frequency Power Amplifier Modules including Duplexers (PAMid) device, a first switching unit, a first selection switch, a second selection switch, and a third selection switch, wherein the first radio-frequency PA Mid device has a radio-frequency antenna port;
the first switching unit has one first terminal and four second terminals, the one first terminal of the first switching unit being connected to the radio-frequency antenna port of the first radio-frequency PA Mid device, and the four second terminals of the first switching unit being connected to the fourth antenna, one first terminal of the first selection switch, one first terminal of the second selection switch, and one first terminal of the third selection switch in one-to-one correspondence;
another first terminal of the first selection switch is connected to the first antenna port of the radio-frequency LFEM device, and a second terminal of the first selection switch is connected to the first antenna;
another first terminal of the second selection switch is connected to the second antenna port of the radio-frequency LFEM device, and a second terminal of the second selection switch is connected to the second antenna;
another first terminal of the third selection switch is connected to the third antenna port of the radio-frequency LFEM device, and a second terminal of the third selection switch is connected to the third antenna; and
the first radio-frequency PA Mid device is further connected to the radio-frequency transceiver, and configured to support reception and transmission of the radio-frequency signal in the first frequency band.

6. The radio-frequency transceiver system according to claim 2, wherein the radio-frequency LFEM device further has a first transceiving port, and wherein the radio-frequency LFEM device further comprises:
a second switching unit having at least four first terminals and at least three second terminals, four first terminals of the at least four first terminals of the second switching unit being connected to input terminals of the three first receiving circuits and the first transceiving port in one-to-one correspondence, and three second terminals of the at least three second terminals of the second switching unit being connected to the first antenna, the second antenna, and the third antenna in one-to-one correspondence.

7. The radio-frequency transceiver system according to claim 6, wherein the radio-frequency LFEM device further comprises:
a second filtering unit connected to the first transceiving port and one of the at least four first terminals of the second switching unit, the second filtering unit being configured to perform filtering processing on the received radio-frequency signal.

8. The radio-frequency transceiver system according to claim 6, wherein the transceiver selection module comprises a first radio-frequency PA Mid device and a third switching unit, wherein:
the first radio-frequency PA Mid device has a radio-frequency antenna port;
the third switching unit has a first terminal connected to the radio-frequency antenna port of the first radio-frequency PA Mid device, and two second terminals connected to the fourth antenna and the first transceiving port, respectively; and
the first radio-frequency PA Mid device is further connected to the radio-frequency transceiver to support reception and transmission of the radio-frequency signal in the first frequency band.

9. The radio-frequency transceiver system according to any one of claims 5 to 8, wherein the radio-frequency signal in the first frequency band is a 5-th Generation mobile communication technology (5G) signal in an N41, N77, or N79 frequency band.

10. The radio-frequency transceiver system according to claim 6, wherein:
the second switching unit has at least seven first terminals;
the radio-frequency LFEM device has at least six receiving ports;
the radio-frequency LFEM device further comprises three second receiving circuits each comprising a second low noise amplifier;
output terminals of the three second low noise amplifiers are connected to another three receiving ports of the at least six receiving ports, respectively;
input terminals of the three second low noise amplifiers are connected to another three first terminals of the at least seven first terminals of the second switching unit, respectively; and
each of the three second receiving circuits is configured to support reception and amplification processing on a radio-frequency signal in a second frequency band, enabling the radio-frequency LFEM device to support three-channel reception of the radio-frequency signal in the second frequency band.

11. The radio-frequency transceiver system according to claim 10, wherein the second receiving circuit further comprises a third filtering unit disposed in a receiving path of the radio-frequency signal in the second frequency band, the third filtering unit being configured to perform filtering processing on the received radio-frequency signal in the second frequency band to output the processed radio-frequency signal in the second frequency band to the second low noise amplifier.

12. The radio-frequency transceiver system according to claim 10, wherein the radio-frequency LFEM device further comprises:
a fourth switching unit having six first terminals and six second terminals, the six first terminals of the fourth switching unit being connected to six receiving ports of the at least six receiving ports, respectively, and the six second terminals of the fourth switching unit being connected to the input terminals of the three first receiving circuits and input terminals of the three second receiving circuits in one-to-one correspondence.

13. The radio-frequency transceiver system according to any one of claims 10 to 12, wherein the transceiver selection module comprises:
a second radio-frequency PA Mid device having two radio-frequency antenna ports connected to the fourth antenna and the first transceiving port in one-to-one correspondence, the second radio-frequency PA Mid device being further connected to the radio-frequency transceiver and configured to support reception and transmission of the radio-frequency signal in the first frequency band and the radio-frequency signal in the second frequency band.

14. The radio-frequency transceiver system according to claim 10, wherein:
the radio-frequency signal in the first frequency band is a 5G signal in an N77 frequency band; and
the radio-frequency signal in the second frequency band is a 5G signal in an N79 frequency band.

15. The radio-frequency transceiver system according to claim 10, wherein the radio-frequency LFEM device has nine receiving ports, and wherein the radio-frequency LFEM device further comprises:
three third receiving circuits, output terminals of the three third receiving circuits being connected to three receiving ports of the nine receiving ports, respectively, the three third receiving circuits being configured to support reception and amplification processing on a radio-frequency signal in a third frequency band, enabling the radio-frequency LFEM device to support three-channel reception of the radio-frequency signal in the third frequency band.

16. The radio-frequency transceiver system according to claim 15, wherein:
the radio-frequency LFEM device further has a fourth antenna port, a fifth antenna port, and a sixth antenna port;
input terminals of the three third receiving circuits are connected to the fourth antenna port, the fifth antenna port, and the sixth antenna port in one-to-one correspondence;
the transceiver selection module comprises a third radio-frequency PA Mid device, a fourth radio-frequency PAMid device, a fifth switching unit, a fourth selection switch, a fifth selection switch, a sixth selection switch, a first combiner, a second combiner, a third combiner, and a fourth combiner;
the third radio-frequency PA Mid device has one radio-frequency antenna port;
the fourth radio-frequency PA Mid device has two radio-frequency antenna ports;
the fifth switching unit has one first terminal and four second terminals, the one first terminal of the fifth switching unit being connected to the one radio-frequency antenna port of the third radio-frequency PA Mid device, three second terminals of the four second terminals of the fifth switching unit being connected to one first terminal of the fourth selection switch, one first terminal of the fifth selection switch, and one first terminal of the sixth selection switch in one-to-one correspondence, and the remaining one second terminal of the four second terminals of the fifth switching unit and one of the two radio-frequency antenna ports of the fourth radio-frequency PAMid device being both connected to the fourth antenna via the fourth combiner;
another first terminal of the fourth selection switch is connected to the fourth antenna port, and a second terminal of the fourth selection switch and the first antenna port are both connected to the first antenna via the first combiner;
another first terminal of the fifth selection switch is connected to the fifth antenna port, and a second terminal of the fifth selection switch and the second antenna port are both connected to the second antenna via the second combiner;
another first terminal of the sixth selection switch is connected to the sixth antenna port, and a second terminal of the sixth selection switch and the third antenna port are both connected to the third antenna via the third combiner;
the third radio-frequency PA Mid device is further connected to the radio-frequency transceiver and configured to support reception and transmission of the radio-frequency signal in the third frequency band; and
the other one of the two radio-frequency antenna ports of the fourth radio-frequency PA Mid device is connected to a second transceiving port, and the fourth radio-frequency PA Mid device is further connected to the radio-frequency transceiver and configured to support reception and transmission of the radio-frequency signal in the first frequency band and the radio-frequency signal in the second frequency band.

17. The radio-frequency transceiver system according to claim 15, wherein:
the radio-frequency LFEM device further has a second transceiving port, a fourth antenna port, a fifth antenna port, and a sixth antenna;
the radio-frequency LFEM device further comprises a sixth switching unit having four first terminals and three second terminals;
the four first terminals of the sixth switching unit are connected to input terminals of the three third receiving circuits and the second transceiving port in one-to-one correspondence; and
the three second terminals of the sixth switching unit are connected to the fourth antenna port, the fifth antenna port, and the sixth antenna in one-to-one correspondence.

18. The radio-frequency transceiver system according to claim 17, wherein the transceiver selection module comprises a third radio-frequency PA Mid device, a fourth radio-frequency PAMid device, a seventh switching unit, a first combiner, a second combiner, a third combiner, and a fourth combiner, wherein:
the third radio-frequency PAMid device has one radio-frequency antenna port;
the fourth radio-frequency PA Mid device has two radio-frequency antenna ports;
the seventh switching unit has one first terminal and two second terminals, the one first terminal of the seventh switching unit being connected to the one radio-frequency antenna port of the third radio-frequency PA Mid device, one of the two second terminals of the seventh switching unit being connected to the second transceiving port, and the other one of the two second terminals of the seventh switching unit and one of the two radio-frequency antenna ports of the fourth radio-frequency PAMid device being both connected to the fourth antenna via the fourth combiner;
the first antenna port and the fourth antenna port are both connected to the first antenna via the first combiner;
the second antenna port and the fifth antenna port are both connected to the second antenna via the second combiner;
the third antenna port and the sixth antenna port are both connected to the third antenna via the third combiner;
the third radio-frequency PA Mid device is further connected to the radio-frequency transceiver, and configured to support reception and transmission of the radio-frequency signal in the third frequency band; and
the other one of the two radio-frequency antenna ports of the fourth radio-frequency PA Mid device is connected to the first transceiving port, the fourth radio-frequency PAMid device is further connected to the radio-frequency transceiver, and the fourth radio-frequency PA Mid device is configured to support reception and transmission of the radio-frequency signal in the first frequency band and the radio-frequency signal in the second frequency band.

19. The radio-frequency transceiver system according to claim 15, wherein:
the radio-frequency LFEM device further has a second transceiving port; and
the second switching unit comprises eleven first terminals, four first terminals of the eleven first terminals of the second switching unit being connected to input terminals of the three third receiving circuits and the second transceiving port in one-to-one correspondence.

20. The radio-frequency transceiver system according to claim 19, wherein the transceiver selection module comprises a third radio-frequency PA Mid device, a fourth radio-frequency PA Mid device, an eighth switching unit, and a fourth combiner, wherein:
the third radio-frequency PAMid device has one radio-frequency antenna port;
the fourth radio-frequency PA Mid device has two radio-frequency antenna ports;
the eighth switching unit has one first terminal and two second terminals, the one first terminal of the eighth switching unit being connected to the one radio-frequency antenna port of the third radio-frequency PA Mid device, one of the two second terminals of the eighth switching unit being connected to the second transceiving port, and the other one of the two second terminals of the eighth switching unit and one of the two radio-frequency antenna ports of the fourth radio-frequency PAMid device being both connected to the fourth antenna via the fourth combiner;
the third radio-frequency PA Mid device is further connected to the radio-frequency transceiver, and configured to support reception and transmission of the radio-frequency signal in the third frequency band; and
the other one of the two radio-frequency antenna ports of the fourth radio-frequency PA Mid device is connected to the first transceiving port, the fourth radio-frequency PA Mid device is further connected to the radio-frequency transceiver, and the fourth radio-frequency PAMid device is configured to support reception and transmission of each of the radio-frequency signal in the first frequency band and the radio-frequency signal in the second frequency band.

21. The radio-frequency transceiver system according to any one of claims 15 to 20, wherein:
each of the three third receiving circuits comprises a third low noise amplifier;
an output terminal of the third low noise amplifier is connected to one receiving port; and
an input terminal of the third low noise amplifier is configured to be connected to the first antenna port, the second antenna port, or the third antenna port to form a receiving path of the radio-frequency signal in the third frequency band.

22. The radio-frequency transceiver system according to claim 21, wherein each of the three third receiving circuits further comprises a fourth filtering unit disposed in the receiving path of the radio-frequency signal in the third frequency band, the fourth filtering unit being configured to perform filtering processing on the received radio-frequency signal in the third frequency band to output the processed radio-frequency signal in the third frequency band to the third low noise amplifier.

23. The radio-frequency transceiver system according to any one of claims 15 to 20, wherein:
the radio-frequency signal in the first frequency band and the radio-frequency signal in the second frequency band are a 5G signal in an N77 frequency band and a 5G signal in an N79 frequency band, respectively; and
the radio-frequency signal in the third frequency band is a 5G signal in an N41 frequency band.

24. A communication device, comprising the radio-frequency transceiver system according to any one of claims 1 to 23.
